(19) Europäisches Patentamt

European Patent Office

Office européen des brevets

(11) **EP 1 304 391 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.⁷: **C21C 5/46**, C21C 5/52, F23D 17/00

(21) Anmeldenummer: **03001437.7**

(22) Anmeldetag: **22.02.1999**

(54) **VERFAHREN ZUN HERSTELLEN EINER METALLSCHMELZE MITTELS EINER MULTIFUNKTIONSLANZE**

METHOD FOR PRODUCING A METAL MELT USING A MULTIFUNCTION LANCE

PROCEDE DE PRODUCTION D'UNE MASSE METALLIQUE EN FUSION EN UTILISANT UNE LANCE MULTIFUNCTION

(84) Benannte Vertragsstaaten:
**AT DE ES FR GB IT**

(30) Priorität: **28.08.1998 AT 147498**
**15.02.1999 AT 21799**

(43) Veröffentlichungstag der Anmeldung:
**23.04.2003 Patentblatt 2003/17**

(62) Dokumentnummer(n) der früheren Anmeldung(en) nach Art. 76 EPÜ:
**99904611.3 / 1 108 071**

(73) Patentinhaber: **VOEST-ALPINE Industrieanlagenbau GmbH**
**4020 Linz (AT)**

(72) Erfinder: **Fritz, Ernst, Dipl.-Ing.**
**4020 Linz (AT)**

(74) Vertreter: **VA TECH Patente GmbH & Co**
**Stahlstrasse 21a**
**4031 Linz (AT)**

(56) Entgegenhaltungen:
**EP-A- 0 140 541** **CH-A- 429 002**
**DE-C- 4 442 362** **US-A- 5 599 375**

**Beschreibung**

Die Erfindung betrifft ein Verfahren zum Herstellen einer Metallschmelze in einem metallurgischen Gefäß, insbesondere einer Eisen- oder Stahlschmelze, wobei metall- und/oder metalloxidhältige Einsatzstoffe in fester und gegebenenfalls schmelzflüssiger Form in das metallurgisches Gefäß chargiert werden, wobei der Hauptteil der zum Schmelzen und gegebenenfalls Fertigreduzieren der Einsatzstoffe erforderlichen Energie auf elektrischem Weg und/oder durch Verbrennen und/oder Vergasen kohlenstoffhältiger Materialien aufgebracht wird.

Die EP 0 257 450 A2 lehrt ein Verfahren zur gesteigerten Energieeinbringung und Stromeinsparung in Lichtbogenöfen für die Stahlerzeugung. Dabei werden von Aufblasvorrichtungen ausgehende Sauerstofffreistrahlen zur Nachverbrennung der Ofenabgase und Unterbaddüsen zur Badbewegung eingesetzt. Kohle für die CO-Bildung wird über eine Hohlelektrode oder Unterbaddüsen eingeblasen und der Sauerstoff für die CO-Bildung ebenfalls durch Unterbaddüsen der Schmelze zugeführt.

Nachteilig dabei ist der hohe apparative Aufwand für Kohleeinblasen, CO-Bildung und Nachverbrennung. Weiters sind die erforderlichen Unterbaddüsen, welche mit Sauerstoff beaufschlagt sind, einem hohen Verschleiß ausgesetzt und weisen dementsprechend nur eine geringe Standzeit auf.

Es hat auch nicht an Versuchen gefehlt, Vorrichtungen und Verfahren zum Heizen und Blasen für metallurgische Zwecke und zum Verbrennen in metallurgischen Reaktoren zur Verfügung zu stellen.

So offenbart die GB 1,015,581 einen Brenner mit einem zentralen Sauerstoffkanal, einem diesen umgebenden Brennstoffzuführungskanal und einem äußere Ringkanal für Sauerstoff. Brennstoff und Sauerstoff werden unmittelbar nach dem Austreten aus den jeweiligen Mündungen miteinander vermischt. Gemäß der GB 1,015,581 ist der Brenner für den Einsatz bei allen aufblasenden Sauerstoff-Stahlerzeugungsverfahren vorgesehen.

Solch ein Brenner ist allerdings nicht geeignet, Ofengase in größerem Umfang zur Nachverbrennung anzusaugen, so daß er zu einer Verbesserung der Energiebilanz nichts bzw. nur wenig beitragen kann.

In der AT 402 963 B wird die Verbrennung von Brennstoff mittels eines speziell ausgebildeten Brenners beschrieben. Durch die rasche, intensive Verwirbelung des Brennstoffs mit Sauerstoff in einer Kammer des Brenners wird das ausströmende Gemisch über die Laufstrecke des Gemischstrahls sehr bald relativ langsam. Ein solcher Brenner weist also eine relativ geringe Flammenlänge auf und vernachlässigt dabei wiederum das Einsaugen von Ofengasen, so daß auch hiermit wenig zu einer Verbesserung der Energiebilanz beigetragen werden kann. Darüber hinaus ist ein solcher Brenner nur bedingt für das Frischen einer Stahlschmelze geeignet.

In der WO 91/00366 ist ein Verfahren, sowie eine Vorrichtung zum Beheizen eines metallurgischen Ofens beschrieben, wobei ein innerer Sauerstoffkanal von einem Brennstoffkanal ringförmig ummantelt wird. Der Brennstoff wird dabei mittels eines inerten bis schwach reduzierenden Trägergases zugeführt. Eine Möglichkeit des Nachverbrennens von Ofenabgasen durch Einsaugen in den Brennerstrahl, sowie eine Möglichkeit des Frischens der Schmelze sind auch hier nicht gegeben.

Die EP-A-140 541 beschreibt das Aufblasen von kohlenstoffhaltigen Festmaterial und sauerstoffhaltigen Gases auf ein eisenhaltiges Schmelzemittels einer oberhalb des Bades endenden Vielfach - Düsen - Lanze. Eine zentrale Düse zum Aufblasen des kohlenstoffhaltigen Materials ist von über zwei konzentrische Ringe verteilt angeordneten Düsen umgeben, die sauerstoffhaltiges Gas zuführen. Die Düsen des äußeren Ringes sind von der Lanzenachse nach außen gerichet. Windschief zur Lanzenachse ausgerichtete Düsen existieren nicht. Die Aufgabe der gegenständlichen Erfindung ist es ein Verfahren zu schaffen, welche(s) die aus dem Stand der Technik bekannten Nachteile vermeidet. Insbesondere soll ein Verfahren geschaffen werden, das zur Herstellung einer Metallschmelze weniger Energie, sowohl elektrische als auch fossile, als bekannte Verfahren erfordert und welches in kürzerer Zeit durchführbar ist. Die für das Verfahren zu verwendenden Multifunktionslanzen sollen kompakt und baulich einfach gehalten und im Falle einer erforderlichen Reparatur leicht und einfach wieder instandzusetzen sein.

Diese Aufgabe wird erfindungsgemäß durch die Kombination der folgenden Merkmale gelöst:

daß

A) in einem Verbrennungsschritt den Einsatzstoffen durch - mittels einer oder mehrerer Multifunktionslanze(n) erfolgendes - Einblasen und Verbrennen gasförmiger und/oder flüssiger kohlenstoffhältiger Materialien und sauerstoffhältigem Gas zusätzliche Energie zugeführt wird,

B) in einem Schneid- und Schmelzschritt die festen Einsatzstoffe durch - mittels der Multifunktionslanze(n) erfolgendes - verstärktes Einblasen von sauerstoffhältigem Gas geschnitten und teilweise geschmolzen werden,

C) in einem Frischschritt die geschmolzenen Einsatzstoffe durch - mittels der Multifunktionslanze(n) erfolgendes - verstärktes Einblasen von sauerstoffhältigem Gas gefrischt werden,

D) in einem Kohlenstoffeinblasschritt den Einsatzstoffen durch - mittels der Multifunktionslanze(n) erfolgendes - Einblasen und gegebenenfalls Verbrennen von feinkörnigen und/oder staubförmigen, festen kohlenstoffhältigen Materialien Legierungskohlenstoff und/oder zusätzliche Energie zugeführt wird,

**E)** in einem Nachverbrennungsschritt die Abgase des metallurgischen Gefäßes - durch mittels der Multifunktionslanze(n) erfolgendes - Einblasen von sauerstoffhältigem Gas in den Abgasraum des metallurgischen Gefäßes nachverbrannt werden, wobei die von jeweils einer Multifunktionslanze ausgehenden Strahlen des sauerstoffhältigen Gases windschief zur zentralen Längsachse der jeweiligen Multifunktionslanze stehen und von dieser weggerichtet sind,

**F)** in einem Feststoffeinblasschritt den Einsatzstoffen durch - mittels der Multifunktionslanze(n) erfolgendes - Einblasen von feinkörnigen und/oder staubförmigen, festen Zuschlagstoffen und/oder Legierungsmitteln die erforderlichen Substanzen zugeführt werden, um die gewünschte Zusammensetzung der Metallschmelze zu erreichen, wobei

die Schritte **A)** bis **F)**, je nach der Zusammensetzung der Einsatzstoffe und der gewünschten Zusammensetzung der Metallschmelze wahlweise in beliebiger Kombination, insbesondere nacheinander und/oder in umgekehrter Reihenfolge und/oder gleichzeitig und/oder unter Auslassung einzelner der Schritte **D)** und/oder **F)** durchgeführt werden.

Mit dem erfindungsgemäßen Verfahren können Metallschmelzen, nach einem vorteilhaften Merkmal beispielsweise in Elektroöfen oder Konvertern oder Einschmelzvergasern oder, besonders energie- und zeitsparend hergestellt werden. Als metallurgische Gefäße können weiters auch Pfannen oder Gefäße zum Umwandeln von Schlacke verwendet werden. Das jeweilige metallurgische Gefäß kann unter Überdruck, atmosphärischem Druck, Unterdruck oder Vakuum stehen.

Die Multifunktionslanzen, die für das erfindungsgemäße Verfahren verwendet werden, ermöglichen eine flexible, wahlfreie und insbesondere auch zeitgleiche Durchführung der einzelnen Verfahrensschritte.

Der Einsatz von festen Metallträgern zur Erzeugung von Schmelzen, insbesondere von Stahlschmelzen, steigt, da diese Materialien bereits metallisch sind und also nicht mehr mit großem Aufwand reduziert werden müssen. In zunehmenden Maße werden also solche festen Metallträger rezirkuliert. Insbesondere werden solche Materialien, wie Schrott, Roheisen, Gußeisen usw., in Elektroöfen verarbeitet, so daß die Verbesserung des Betriebes von Elektroöfen besonders wichtig ist. Das schnelle Einschmelzen und Frischen für das Einstellen kurzer Ofentaktzeiten ist für die Erzielung niedriger Wärmeverluste und Elektrodenverbräuche, sowie für die unterbrechungsfreie Versorgung moderner Stranggußanlagen wichtig. Außerdem soll die Schmelzleistung von Elektroöfen auch durch das gezielte, parallele Einbringen von elektrischer und fossiler Energie erhöht werden.

Diese Anforderungen werden durch das erfindungsgemäße Verfahren erfüllt.

Nach einem vorteilhaften Merkmal des erfindungsgemäßen Verfahrens werden eine oder mehrere Multifunktionslanze(n) gemeinsam mit an sich jeweils bekannten Brennern und/oder Frischlanzen und/oder Nachverbrennungslanzen und/oder - bei Elektroöfen - Unterbaddüsen und/oder Hohlelektroden und/oder - bei Konvertern - Seitendüsen verwendet.

Dadurch ist es möglich, daß Brenner und/oder Frischlanzen und/oder Nachverbrennungslanzen gewissermaßen die "Grundlast" eines entsprechenden Verfahrensschrittes abdecken und durch die zusätzlich verwendeten Multifunktionslanze(n) für einen schnellen Verfahrensablauf an besonders wichtigen Stellen des metallurgischen Gefäßes zusätzlich Energie eingebracht, aufgeschmolzen, gefrischt, Kohle und/oder Legierungsmittel eingeblasen, Abgas nachverbrannt, usw. wird.

Einer weitere vorteilhafte Ausführungsform des erfindungsgemäßen Verfahrens besteht darin, daß in einem Feststoffeinblasschritt einer oder mehrere der folgenden Stoffe in bzw. auf die teilweise oder völlig aufgeschmolzen Einsatzstoffe geblasen wird: Metallerze, wie Chromerz, Nickelerz und Manganerz, Metalloxide, wie Nickeloxid, Vanadinoxid und Chromoxid, Eisenkarbid, Kalziumkarbid, Aluminium, FeSi, FeCr, FeMn, ölhaltiger Zunder, Schlacken, Schlackenbildner, Stäube aus Entstaubungsanlagen, Schleifstäube, Metallspäne, Desoxidationsmittel, Schredder-Leichtfraktion, Kalk, Kohle, Koks und Eisenschwamm in jeweils feinkörniger und/oder staubförmiger Form.

Bei mehreren einzublasenden Stoffen können diese miteinander vermischt oder getrennt in/auf die teilweise oder völlig aufgeschmolzen Einsatzstoffe geblasen werden. Das Einbringen einer Mischung von Stoffen kann beispielsweise etwa dann von Vorteil sein, wenn Metallerze und/oder Metalloxide gemeinsam mit Desoxidationsmitteln eingeblasen werden.

Bevorzugterweise erfolgt in einem Nachverbrennungsschritt das Einblasen von sauerstoffhältigem Gas periodisch schwankend und/oder pulsierend.

Dadurch kann das Nachverbrennen der Abgase des metallurgischen Gefäßes besonders effizient erfolgen, so daß die dabei freiwerdende Energie mit hohem Wirkungsgrad an die Einsatzstoffe übertragen wird und nicht an das Abgassystem verloren geht, welches sogar wärmetechnisch entlastet wird.

Nach einer weiteren Ausführungsform des erfindungsgemäßen Verfahrens wird in einem Kohlenstoffeinblasschritt und/oder einem Feststoffeinblasschritt in einem Elektroofen der Strahl aus einer Multifunktionslanze in die Nähe der Auftreffstelle oder in die Auftreffstelle von festem Material, welches über eine Öffnung im Ofendeckel auf die Schmelze chargiert wird, oder eines Lichtbogens auf der Schmelze gerichtet.

Gemäß einer gleichermaßen vorteilhaften Ausführungsform wird in einem Kohlenstoffeinblasschritt und/oder einem Feststoffeinblasschritt in einem Konverter der Strahl aus einer Multifunktionslanze in die Nähe der Auftreffstelle oder in die Auftreffstelle eines Sauerstoffstrahls aus einer weiteren Lanze oder einer Seitendüse auf der Schmelze gerichtet.

Die beiden letztgenannten Ausführungsformen sind insbesondere dann vorteilhaft, wenn große Mengen an Erzen, NiO, oxidischen Fines und Stäuben, die jeweils auch mit Kohle vermischt sein können, reduziert werden müssen. Durch das Einbringen von Kohlenstoff an der bzw. den Stellen, wo gleichzeitig auch die größte Energiezufuhr stattfindet, wird die Reduktion und das Aufschmelzen der Einsatzstoffe besonders beschleunigt.

Nach einem besonders vorteilhaften Merkmal des erfindungsgemäßen Verfahrens werden einer oder mehrere der Verfahrensschritte A, B, D, E und F mittels einer Multifunktionslanze im wesentlichen zeitgleich mit einem Frischschritt durchgeführt, wobei es besonders bevorzugt ist, einen Verbrennungsschritt im wesentlichen zeitgleich mit einem Frischschritt durchzuführen. Unter "im wesentlichen zeitgleich" wird dabei eine zumindest teilweise zeitliche Überlappung der beiden Verfahrensschritte verstanden.

Zusätzlich zum verstärkten Einblasen von sauerstoffhältigem Gas, wodurch die geschmolzenen Einsatzstoffe gefrischt werden, werden auch flüssige und/ oder gasförmige kohlenstoffhältige Stoffe und sauerstoffhältiges Gas eingeblasen und die kohlenstoffhältigen Stoffe verbrannt.

Nach einem weiteren vorteilhaften Merkmal des erfindungsgemäßen Verfahrens wird in einem Frischschritt bei der Herstellung von - bevorzugt legierten - Eisenschmelzen mit niedrigem Kohlenstoffgehalt - zusätzlich zum verstärkten Einblasen von sauerstoffhältigem Gas - Wasserdampf und/oder ein Inertgas, wie Stickstoff und/oder Edelgase, in bzw. auf die teilweise oder bereits vollständig aufgeschmolzenen Einsatzstoffe geblasen.

Damit wird der CO-Partialdruck und somit die Eisenverschlackung, sowie die Verschlackung von Legierungselementen, insbesondere die Chrom-Verschlackung, wesentlich vermindert

Gemäß einer Ausführungsform des erfindungsgemäßen Verfahrens werden in einem Kohlenstoffeinblasschritt zur Herstellung von Eisen- bzw. Stahlschmelzen mit niedrigem Kohlenstoffgehalt die kohlenstoffhältigen Materialien mit niedriger Geschwindigkeit nur auf und in die über der Schmelze befindliche Schlacke geblasen.

Dadurch wird hier eine zusätzliche Aufkohlung der Schmelze vermieden. Die kohlenstoffhältigen Materialien dienen dann in erster Linie zum Schäumen der Schlacke.

Einer weiteren vorteilhaften Ausführungsform des erfindungsgemäßen Verfahrens zufolge wird während einem oder mehreren der Verfahrensschritte A, B, C und E ein Flüssigkeitseinblasschritt (G) durchgeführt, wobei - mittels der Multifunktionslanze(n) - brennbare und/oder unbrennbare, ansonsten schwer zu entsorgende, gegebenenfalls toxische, Flüssigkeiten, beispielsweise halogenierte Kohlenwasserstoffe oder Öle, eingeblasen, thermisch zerlegt und dadurch umweltfreundlich entsorgt werden.

Unter Flüssigkeiten sind in diesem Zusammenhang auch Lösungen von zu entsorgenden Feststoffen in entsprechenden Lösungsmitteln zu verstehen.

Bevorzugterweise erfolgt der Flüssigkeitseinblasschritt auf die heißeste Stelle im metallurgischen Gefäß, infolgedessen ist es besonders bevorzugt, den Flüssigkeitseinblasschritt während eines Frischschrittes durchzuführen, bzw. den Flüssigkeitsstrahl auf die Auftreffstelle eines Lichtbogens auf der Schmelze zu richten.

In Verbindung mit einer entsprechenden Nachbehandlung des Abgases des metallurgischen Gefäßes, wie etwa Abschrecken, Aktivkohleeinblasen, etc., gelingt es, schwer zu entsorgende Flüssigkeiten nicht nur umweltverträglich, sondern auch noch nutzbringend zu entsorgen.

Gemäß einer weiteren Ausführungsform des erfindungsgemäßen Verfahrens wird während eines Frischschrittes (C) der eingeblasene Strahl des sauerstoffhältigen Gases durch - mittels der Multifunktionslanze erfolgendes - Einblasen eines weiteren Gasstrahles gezielt beeinflusst.

Eine Multifunktionslanze zur Verwendung im erfindungsgemäßen Verfahren ist vorzugzweise ausgebildet, mit mehreren einander umschließenden, zu einer zentralen Längsachse konzentrischen Rohren, deren eines gemeinsames Ende den Kopf der Multifunktionslanze bildet.

Die Ausbildung der Lanze ist unter anderem davon abhängig, ob die Lanze für das Einblasen großer oder kleiner Feststoffmengen geeignet sein soll.

Die für das Einblasen kleiner Feststoffmengen eingesetzte Lanze hat vorzugsweise folgende Merkmale:

- ein erstes Rohr (1) zur Bildung eines Zufuhrkanals insbesondere für feste, feinkörnige bis staubförmige Substanzen,

- ein das erste Rohr (1) unter Bildung eines ersten Ringspalts (4) - insbesondere zur Zufuhr eines sauerstoffhältigen Gases - umgebendes zweites Rohr (3), wobei der Mündungsteil (6) des zweiten Rohres (3) als Lavaldüse ausgebildet ist,

- ein das zweite Rohr (3) unter Bildung eines zweiten Ringspalts (8) - insbesondere zur Zufuhr von gasförmigem und/oder flüssigem Brennstoff - umgebendes drittes Rohr (7),

- ein das dritte Rohr (7) unter Bildung eines dritten Ringspalts (10) - insbesondere zur Zufuhr eines sauerstoffhältigen Gases - umgebendes viertes Rohr (9),

- ein das vierte Rohr (9) unter Bildung eines vierten Ringspaltes (12) - insbesondere zur Zufuhr eines sauerstoffhältigen Gases - umgebendes fünftes Rohr (11), wobei der vierte Ringspalt (12) mündungsseitig unter Bildung mehrerer Ausströmkanäle (13) endet und wobei die Mittelachse jeweils eines Ausströmkanals (13) zur zentralen Längsachse (2) windschief ausgerichtet und von dieser weggerichtet ist.

Besonders vorteilhaft ist hier das erste Rohr, durch welches überwiegend feinkörnige und/oder staubförmige Feststoffe in und/oder auf die Schmelze bzw. Schlacke geblasen werden. Je nach Verfahrensschritt erfolgt in einem Kohlenstoffeinblasschritt eine Zufuhr von kohlenstoffhältigen Materialien, insbesondere Kohle, aber beispielsweise auch Koks und/oder Shredderleichtfraktion, und in einem Feststoffeinblasschritt eine Zufuhr von Zuschlagstoffen und/oder Legierungsmitteln, wobei unter Zuschlagstoffen und Legierungsmitteln alle herkömmlichen, üblicherweise bei der Herstellung von Metallschmelzen, insbesondere von Stahl- und Roheisenschmelzen, verwendeten Schlakkenbildner, Mittel zum Schlackeschäumen, Mittel zum Oxidieren unerwünschter Begleitelemente, Mittel zum Einstellen der gewünschten Zusammensetzung der Metallschmelze, etc. verstanden werden. Das erste Rohr ermöglicht die Kohlenstoff- und Feststoffeinblasfunktionen der Multifunktionslanze.

Mittels der durch die obige Merkmalskombination gekennzeichneten Multifunktionslanze können Feststoffe in einer Größenordnung von bis zu 10 kg/min eingeblasen werden.

Durch die Ausbildung des Mündungsteiles des zweiten Rohres als Lavaldüse kann der Vordruck des bei Schneid- und Schmelzschritten und bei Frischschritten zugeführten sauerstoffhältigen Gases in Impuls, also Geschwindigkeit umgesetzt werden. Der von erstem und zweitem Rohr gebildete erste Ringspalt ermöglicht die Schneid-, Schmelz- und Frischfunktionen der Multifunktionslanze.

Unter sauerstoffhältigem Gas ist in bevorzugter Weise technischer Sauerstoff, wie er beispielsweise aus einer Luftzerlegungsanlage erhalten wird, oder Luft oder mit Sauerstoff angereicherte Luft zu verstehen.

Der zweite, bzw. dritte Ringspalt dienen bei einem Verbrennungsschritt zur Zufuhr von gasförmigem und/oder flüssigem Brennstoff, beispielsweise Erdgas und/oder Heizöl, bzw. zur Zufuhr von sauerstoffhältigem Gas, insbesondere technischem Sauerstoff, mit dem der Brennstoff verbrannt wird. Zweiter und dritter Ringspalt ermöglichen zusammen für einen Verbrennungsschritt die Brennerfunktion der Multifunktionslanze.

Der von viertem und fünftem Rohr gebildete vierte Ringspalt dient in einem Nachverbrennungsschritt zur Zufuhr von sauerstoffhältigem Gas und ermöglicht somit die Nachverbrennungsfunktion der Multifunktionslanze.

Gemäß einer bevorzugten Ausgestaltungsform endet der vierte Ringspalt mündungsseitig unter Bildung von 2 bis 16, vorzugsweise von 4 bis 6 Ausströmkanälen.

Die Ausströmkanäle sind vorzugsweise derart von der zentralen Längsachse weggerichtet, daß die Normalprojektion der Mittelachse jeweils eines Ausströmkanals auf eine durch die zentrale Längsachse und durch die Mündung des Ausströmkanals gelegte Ebene mit der zentralen Längsachse einen Winkel α von 2,5 bis 25°, vorzugsweise einen Winkel α von 5 bis 15° einschließt.

Durch diese Ausgestaltung der Ausströmkanäle kann mit dem sauerstoffhältigen Gas, das durch die Ausströmkanäle der Atmosphäre des metallurgischen Gefäßes zugeführt wird, ein weiter Bereich dieser Atmosphäre erfaßt und brennbare Abgase nachverbrannt werden.

Die Mittelachsen der Ausströmkanäle stehen windschief zur zentralen Längsachse der Multifunktionslanze und zwar bevorzugt derart, daß die Normalprojektion der Mittelachse jeweils eines Ausströmkanals auf eine normal zur zentralen Längsachse gerichtete Ebene mit einer durch die zentrale Längsachse und durch die Mündung des Ausströmkanals gelegten Ebene einen Winkel β von 2,5 bis 60°, vorzugsweise einen Winkel β von 5 bis 20°, einschließt.

Diese Gestaltung der Ausströmkanäle gestattet eine noch weitreichendere Nachverbrennung von Abgasen des metallurgischen Gefäßes, da dadurch das über die Ausströmkanäle eingeblasene sauerstoffhältige Gas und in der Folge auch die in diese Sauerstoffgasstrahlen eingesaugten Abgase des metallurgischen Gefäßes in eine schraubenförmige Drehbewegung versetzt werden. Dies fördert die Durchmischung des sauerstoffhältigen Gases mit den Abgasen, sowie deren Nachverbrennung.

Die einzelnen Winkel α bzw. β können für einzelne Ausströmkanäle auch jeweils unterschiedlich gewählt sein, um speziellen Randbedingungen beim Einsatz der Multifunktionslanze optimal Rechnung zu tragen.

Das äußerste, also das fünfte Rohr ist vorteilhafterweise mit einer Kühlung versehen, welche vorzugsweise als wassergekühlter Doppelmantel ausgeführt ist.

Durch die nach diesem Merkmal vorgesehene Kühlung wird die Lebensdauer der Multifunktionslanze verlängert.

Nach einem weiteren vorteilhaften Merkmal weisen die Mündungsteile des zweiten und/oder des dritten Rohres an der Außenseite Schlitze auf, wobei diese Schlitze bevorzugterweise parallel zur zentralen Längsachse angeordnet sind. Diese Schlitze dienen zur verbesserten Kühlung des jeweiligen Mündungsteils.

Gemäß einer vorteilhaften Ausgestaltungsvariante enden die Mündungsteile des ersten, des zweiten und des dritten Rohres in einer ersten, zur zentralen Längsachse normal stehenden Mündungsebene und die Mündungsteile des vierten und fünften Rohres in einer zweiten, zur zentralen Längsachse normal stehenden Mündungsebene, wobei die erste hinter die zweite Mündungsebene zurückgesetzt ist.

Für diesen Fall ist zweckmäßigerweise auch der wassergekühlte Doppelmantel bis zur zweiten Mündungsebene vorgezogen.

Die im Inneren der Multifunktionslanze angeordneten Rohre werden dadurch an deren Mündung besser vor mechanischer Beanspruchung geschützt.

Um Reparaturarbeiten schnell und einfach durchführen zu können, ist das Mündungsende des zweiten Rohres von einem mit dem zweiten Rohr lösbar verbundenen, insbesondere schraubbar verbundenen Mündungsteil gebildet.

Gemäß vorteilhafter Ausgestaltungsformen sind das erste und gegebenenfalls das zweite Rohr verschleißfest ausgeführt.

Die verschleißfeste Ausführung des ersten und gegebenenfalls zweiten Rohres ist bevorzugterweise so gestaltet, daß das erste und gegebenenfalls das zweite Rohr aus einem legierten Stahl mit Chromcarbiden oder aus einem hartverchromten Stahl oder aus hartverchromtem Kupfer oder aus Kupfer bzw. einem Stahl gefertigt ist, der innen- und gegebenenfalls außenseitig mit einem Keramikeinsatz bzw. -überzug versehen ist.

Diese verschleißfesten Ausführungen gestatten es, abrasive Medien, wie beispielsweise feinkörnige Kohle, Metalloxide, Schlackenbildner und dgl. durch das erste Rohr und gegebenenfalls durch den von erstem und zweitem Rohr gebildeten Ringspalt mittels eines Trägergases in bzw. auf die Schmelze bzw. Schlacke zu blasen, ohne dadurch die Lebensdauern des ersten und zweiten Rohres wesentlich zu verkürzen.

Um weiters besonders rasch und einfach Reparaturen durchführen zu können, sind vorteilhafterweise das dritte und das vierte Rohr in ihrer Länge geteilt und die jeweiligen Rohrteile durch lösbare Verbindungen, insbesondere Schraubverbindungen, aneinander befestigt.

Gemäß einer weiteren vorteilhaften Ausgestaltungsform sind zusätzlich zur Mündung des zweiten Rohres auch die Mündung(en) des ersten und/oder des dritten und/oder des vierten Rohres und/oder die Ausströmkanäle als Lavaldüsen ausgebildet.

Dies ist insbesondere dafür zweckmäßig, um zusätzlich zur Frisch- und Schneidfunktion auch für eine oder mehrere der Funktionen Brenner, Kohlenstoff- und Feststoffeinblasen und Nachverbrennung hohe Geschwindigkeit und damit Impuls und Reichweite bzw. Eindringtiefe der jeweiligen Gas- und/oder Gas/Feststoffstrahlen zu erhalten.

Die Gestaltung der Lavaldüsen-Form der Mündung des zweiten Rohres ist zweckmäßigerweise so ausgeführt, daß der Öffnungswinkel $\gamma$ des kegelförmigen Teils der Mündung des zweiten Rohres 0,1 bis 5°, bevorzugt 0,5 bis 3° beträgt.

Die Wahl des Öffnungswinkels $\gamma$ ist unter anderem auch von den im Schmelzgefäß herrschenden Bedingungen abhängig. So werden bei einem unter Überdruck stehenden

Schmelzgefäß eher kleinere Werte für $\gamma$ gewählt, während bei einem Schmelzgefäß, in dem Unterdruck oder Vakuum herrscht, größere Werte vorteilhaft sind.

Einer weiteren vorteilhaften Ausgestaltungsform zufolge ist das erste Rohr innerhalb des zweiten Rohres entlang der zentralen Längsachse verfahrbar, um weiteren Einfluß auf die Fest- und Kohlenstoffeinblasfunktion nehmen zu können. Weiters kann damit, wenn das erste Rohr hinter die Engstelle des zweiten Rohres verfahren ist, bei gegebenem Vordruck eine Erhöhung der zu blasenden Sauerstoffmenge erzielt werden.

Zur Versorgung der Multifunktionslanze mit Trägergas sind das erste Rohr, sowie der erste, der zweite, der dritte und der vierte Ringspalt jeweils mit einer Trägergasversorgung, insbesondere einer Inertgasversorgung, verbunden.

Trägergas bzw. Inertgas kann je nach aktuell durchgeführtem Verfahrensschritt als Injektorgas zur Kohlenstoff- oder Feststoffeindüsung oder zum Einstellen eines definierten Sauerstoffgehalts des während eines Schneid- und Schmelz-, Frisch- oder Verbrennungsschrittes zugeführten sauerstoffhältigen Gases dienen. Weiters kann die Multifunktionslanze vor ihrem Einsatz im erfindungsgemäßen Verfahren, bzw. die zum jeweiligen Zeitpunkt ungenutzten Blasquerschnitte mit einem geringen Inertgasstrom gespült und frei von Metallspritzern gehalten werden.

Zur Versorgung der Multifunktionslanze mit allen übrigen, für die Verfahrensschritte erforderlichen Gasen, sind das erste Rohr, sowie der erste, der dritte und der vierte Ringspalt jeweils mit einer Sauerstoffversorgung, einer Luftversorgung, gegebenenfalls einer Dampfversorgung, sowie einer zu- und abschaltbaren Feststoffeindüsung verbunden und der zweite Ringspalt mit einer Brennstoffversorgung - für die Versorgung mit flüssigem und/oder gasförmigem Brennstoff- verbunden.

Um gegebenenfalls auch durch das erste Rohr, welches ansonsten überwiegend zum Kohle- und Feststoffblasen dient, in einem Schneid- und Schmelz- und/oder Frischschritt Sauerstoff blasen zu können, ist mittels einer Umschalteinrichtung, insbesondere eines Umschaltventils, von der Trägergas- und Feststoffversorgung des ersten Rohres auf die Sauerstoffversorgung umschaltbar.

Vorteilhafterweise ist die Zufuhr von Gasen zu der Multifunktionslanze durch eine Einstellung des Vordrucks des jeweiligen Gases regelbar.

Alternativ oder zusätzlich dazu ist die Zufuhr von Gasen zu der Multifunktionslanze mittels einfacher starrer Blenden und/oder Schnellschlußventilen, welche jeweils in den einzelnen Gasleitungen angeordnet sind, einstellbar.

Für das Einblasen großer Feststoffmengen wird vorzugsweise eine Lanze mit folgenden Merkmalen verwendet. Die Lanze hat :

- ein erstes Rohr zur Bildung eines Zufuhrkanals insbesondere für Flüssigkeiten oder sauerstoffhältiges Gas,
- ein das erste Rohr unter Bildung eines ersten Ringspalts - insbesondere zur Zufuhr eines sauerstoffhältigen Gases - umgebendes zweites Rohr, wobei der Mündungsteil des zweiten Rohres als Lavaldüse ausgebildet ist,
- ein das zweite Rohr unter Bildung eines zweiten Ringspalts - insbesondere zur Zufuhr von gasförmigem und/oder flüssigem Brennstoff- umgebendes drittes Rohr,
- ein das dritte Rohr unter Bildung eines dritten Ringspalts - insbesondere zur Zufuhr eines sauerstoffhältigen Gases - umgebendes viertes Rohr,
- ein das vierte Rohr unter Bildung eines vierten Ringspalts - insbesondere zur Zufuhr von Kühlwasser - umgebendes fünftes Rohr, wobei der vierte Ringspalt mündungsseitig verschlossen ausgeführt ist,
- ein das fünfte Rohr unter Bildung eines fünften Ringspalts - insbesondere zur Zufuhr von sauerstoffhältigem Gas - umgebendes sechstes Rohr, wobei der fünfte Ringspalt mündungsseitig unter Bildung mehrerer Ausströmkanäle endet und wobei die Mittelachse jeweils eines Ausströmkanals zur zentralen Längsachse windschief ausgerichtet und von dieser weggerichtet ist,
- ein das sechste Rohr unter Bildung eines sechsten Ringspalts - insbesondere zum Abziehen von Kühlwasser - umgebendes siebtes Rohr, wobei der sechste Ringspalt mündungsseitig verschlossen ausgeführt ist und wobei der vierte Ringspalt mit dem sechsten Ringspalt im Bereich des Kopfes der Multifunktionslanze durch - die Ausströmkanäle nicht überkreuzende - Bohrungen verbunden ist,
- ein bis neun verschleißfest ausgeführte Düsenrohre - insbesondere zur Zufuhr fester, feinkörniger bis staubförmiger Substanzen -, wobei die Düsenrohre innerhalb des fünften Ringspalts und die Mittelachse jeweils eines Düsenrohres parallel zur Längsachse angeordnet sind/ist und wobei die Düsenrohre den Kopf der Multifunktionslanze durchstoßen, ohne Bohrungen oder Ausströmkanäle zu überkreuzen.

Besonders vorteilhaft sind hier die Düsenrohre, durch welche feinkörnige und/oder staubförmige Feststoffe in und/oder auf die Schmelze bzw. Schlacke geblasen werden. Je nach Verfahrensschritt erfolgt in einem Kohlenstoffeinblasschritt eine Zufuhr von kohlenstoffhältigen Materialien, insbesondere Kohle, aber beispielsweise auch Koks und/oder Shredderleichtfraktion, und in einem Feststoffeinblasschritt eine Zufuhr von Zuschlagstoffen und/oder Legierungsmitteln, wobei unter Zuschlagstoffen und Legierungsmitteln alle herkömmlichen, üblicherweise bei der Herstellung von Metallschmelzen, insbesondere von Stahl- und Roheisenschmelzen, verwendeten Schlackenbildner, Mittel zum Schlackeschäumen, Mittel zum Oxidieren unerwünschter Begleitelemente, Mittel zum Einstellen der gewünschten Zusammensetzung der Metallschmelze, etc. verstanden werden. Die Düsenrohre ermöglichen die Kohlenstoff- und Feststoffeinblasfunktionen der Multifunktionslanze.

Die durch die obige Merkmalskombination gekennzeichnete Multifunktionslanze eignet sich hervorragend zum Einblasen auch sehr großer Feststoffmengen von bis zu 200 kg/min. Dies ist dann besonders vorteilhaft, wenn größere Anteile elektrischer Energie, die bisher zur Herstellung der Schmelze erforderlich war, durch fossile Energie ersetzt werden sollen, um beispielsweise die Produktivität weiter zu steigern oder wenn größere Mengen der oben angeführten Feststoffe für die verschiedensten Anwendungsfälle pneumatisch in die Schlacke und/oder Schmelze eingeblasen werden sollen.

Durch die Ausbildung des Mündungsteiles des zweiten Rohres als Lavaldüse kann der Vordruck des bei Schneid- und Schmelzschritten und bei Frischschritten zugeführten sauerstoffhältigen Gases in Impuls, also Geschwindigkeit umgesetzt werden. Der von erstem und zweitem Rohr gebildete erste Ringspalt ermöglicht die Schneid-, Schmelz- und Frischfunktionen der Multifunktionslanze.

Unter sauerstoffhältigem Gas ist in bevorzugter Weise technischer Sauerstoff, wie er beispielsweise aus einer Luftzerlegungsanlage erhalten wird, oder Luft oder mit Sauerstoff angereicherte Luft zu verstehen.

Das erste Rohr dient zum reproduzierbaren Steuern des Impulses des Lavalstrahles aus dem ersten Ringspalt, indem mit dem ersten Rohr die Strahlausbreitung und damit auch die Frischwirkung des Lavalstrahles reguliert wird. Dies wird auch dazu eingesetzt, um bei niedriger Badhöhe den feuerfesten Boden des metallurgischen Gefäßes nicht zusätzlich zu verschleißen, bzw. um gezielt höhere FeO-Gehalte in Schlacken über Stahlschmelzen sicherzustellen, um dadurch die Entphosphorung der Metallschmelzen auch bei höheren Kohlenstoffgehalten der Schmelze wesentlich zu verbessern. Die erfindungsgemäße Multifunktionslanze weist also auch die Fähigkeit auf, die Eisenoxidgehalte der Schlacken und somit die Entphosphorung, beispielsweise aber auch die Entvanadisierung, der Eisenschmelze zu steuern.

Durch das erste Rohr können auch zu entsorgende Flüssigkeiten in den Lavalstrahl bzw. den Brennfleck vor der Multifunktionslanze eingedüst werden. Das erste Rohr ermöglicht somit unter anderem die Flüssigkeitseinblasfunktion der Multifunktionslanze.

Normalerweise ist das erste Rohr aber mit Sauerstoff bzw. sauerstoffhältigem Gas beaufschlagt. Beim Frischen von legierten Schmelzen kann das erste Rohr mit Luft oder Inertgas oder Dampf beaufschlagt werden, um den CO-Partialdruck im Brennfleck vor der Multifunktionslanze zu erniedrigen und damit die Chrom-Verschlackung zu verringern.

Der zweite, bzw. dritte Ringspalt dienen bei einem Verbrennungsschritt zur Zufuhr von gasförmigem und/oder flüssigem Brennstoff, beispielsweise Erdgas und/oder Heizöl, bzw. zur Zufuhr von sauerstoffhältigem Gas, insbesondere technischem Sauerstoff, mit dem der Brennstoff verbrannt wird. Zweiter und dritter Ringspalt ermöglichen zusammen für einen Verbrennungsschritt die Brennerfunktion der Multifunktionslanze.

Der von fünftem und sechstem Rohr gebildete fünfte Ringspalt dient in einem Nachverbrennungsschritt zur Zufuhr von sauerstoffhältigem Gas und ermöglicht somit die Nachverbrennungsfunktion der Multifunktionslanze.

Durch den vom vierten und sechsten Ringspalt und den diese Ringspalte verbindenden Bohrungen im Kopf der Multifunktionslanze gebildeten Kühlmantel wird die Lebensdauer der Multifunktionslanze verlängert.

Gemäß einer bevorzugten Ausgestaltungsform endet der fünfte Ringspalt mündungsseitig unter Bildung von 2 bis 16, vorzugsweise von 4 Ausströmkanälen.

Die Ausströmkanäle sind vorzugsweise derart von der zentralen Längsachse weggerichtet, daß die Normalprojektion der Mittelachse jeweils eines Ausströmkanals auf eine durch die zentrale Längsachse und durch die Mündung des Ausströmkanals gelegte Ebene mit der zentralen Längsachse einen Winkel $\alpha$ von 2,5 bis 25°, vorzugsweise einen Winkel $\alpha$ von 5 bis 15° einschließt.

Durch diese Ausgestaltung der Ausströmkanäle kann mit dem sauerstoffhältigen Gas, das durch die Ausströmkanäle der Atmosphäre des metallurgischen Gefäßes zugeführt wird, ein weiter Bereich dieser Atmosphäre erfaßt und brennbare Abgase nachverbrannt werden.

Gemäß einem vorteilhaften Merkmal stehen die Mittelachsen der Ausströmkanäle windschief zur zentralen Längsachse der Multifunktionslanze und zwar derart, daß die Normalprojektion der Mittelachse jeweils eines Ausströmkanals auf eine normal zur zentralen Längsachse gerichtete Ebene mit einer durch die zentrale Längsachse und durch die Mündung des Ausströmkanals gelegten Ebene einen Winkel $\beta$ von 2,5 bis 60°, vorzugsweise einen Winkel $\beta$ von 5 bis 20°, einschließt.

Diese Gestaltung der Ausströmkanäle gestattet eine noch weitreichendere Nachverbrennung von Abgasen des metallurgischen Gefäßes, da dadurch das über die Ausströmkanäle eingeblasene sauerstoffhältige Gas und in der Folge auch die in diese Sauerstoffgasstrahlen eingesaugten Abgase des metallurgischen Gefäßes in eine schraubenförmige Drehbewegung versetzt werden. Dies fördert die Durchmischung des sauerstoffhältigen Gases mit den Abgasen, sowie deren Nachverbrennung.

Die einzelnen Winkel $\alpha$ bzw. $\beta$ können für einzelne Ausströmkanäle auch jeweils unterschiedlich gewählt sein, um speziellen Randbedingungen beim Einsatz der Multifunktionslanze optimal Rechnung zu tragen.

Die Gestaltung der Lavaldüsen-Form der Mündung des zweiten Rohres ist zweckmäßigerweise so ausgeführt, daß der Öffnungswinkel $\gamma$ des kegelförmigen Teils der Mündung des zweiten Rohres 0,1 bis 5°, bevorzugt 0,5 bis 3° beträgt.

Die Wahl des Öffnungswinkels $\gamma$ ist unter anderem auch von den im Schmelzgefäß herrschenden Bedingungen abhängig. So werden bei einem unter Überdruck stehenden Schmelzgefäß eher kleinere Werte für $\gamma$ gewählt, während bei einem Schmelzgefäß, in dem Unterdruck oder Vakuum herrscht, größere Werte vorteilhaft sind.

Nach einem weiteren vorteilhaften Merkmal weisen die Mündungsteile des zweiten und/oder des dritten Rohres an der Außenseite Schlitze auf, wobei diese Schlitze bevorzugterweise parallel zur zentralen Längsachse angeordnet sind. Diese Schlitze dienen zur verbesserten Kühlung des jeweiligen Mündungsteils.

Gemäß einer vorteilhaften Ausgestaltungsvariante enden die Mündungsteile des zweiten und des dritten Rohres in einer ersten, zur zentralen Längsachse normal stehenden Mündungsebene und die Mündungsteile des vierten, fünften, sechsten und siebten Rohres in einer zweiten, zur zentralen Längsachse normal stehenden Mündungsebene, wobei die erste hinter die zweite Mündungsebene zurückgesetzt ist.

Die im Inneren der Multifunktionslanze angeordneten Rohre werden dadurch an deren Mündung besser vor mechanischer Beanspruchung geschützt.

Einer weiteren vorteilhaften Ausgestaltungsform zufolge ist das erste Rohr innerhalb des zweiten Rohres entlang der zentralen Längsachse verfahrbar, um weiteren Einfluß auf den Lavalstrahl aus dem ersten Ringspalt nehmen zu können. Weiters kann damit, wenn das erste Rohr hinter die Engstelle des zweiten Rohres verfahren ist, bei gegebenem Vordruck eine Erhöhung der zu blasenden Sauerstoffmenge erzielt werden.

Um Reparaturen schnell und einfach durchführen zu können, ist das Mündungsende des zweiten Rohres von einem mit dem zweiten Rohr lösbar verbundenen, insbesondere schraubbar oder mittels einer - durch O-Ringe abgedichteten - Gleitverbindung verbundenen Mündungsteil gebildet wird.

Um weiters besonders rasch und einfach Reparaturen durchführen zu können, sind vorteilhafterweise das dritte und/oder das vierte und/oder das fünfte und/oder das sechste und/oder das siebte Rohr in ihrer Länge zumindest einmal geteilt sind und die jeweiligen Rohrteile durch lösbare Verbindungen, insbesondere Schraubverbindungen und/oder durch O-Ringe abgedichtete Gleitverbindungen, aneinander befestigt.

Gemäß einer weiteren vorteilhaften Ausgestaltungsform sind zusätzlich zur Mündung des zweiten Rohres auch die Mündung(en) des dritten und/oder des vierten Rohres und/oder die Ausströmkanäle und/oder des/der Düsenrohre(s) als Lavaldüsen ausgebildet und/oder die Mündung des ersten Rohres im Durchmesser erweitert.

Diese Lavaldüsen-Form ist insbesondere dafür zweckmäßig, um zusätzlich zur Frisch- und Schneidfunktion auch für eine oder mehrere der Funktionen Brenner, Kohlenstoff- und Feststoffeinblasen und Nachverbrennung hohe Geschwindigkeit und damit Impuls und Reichweite bzw. Eindringtiefe der jeweiligen Gas- und/oder Gas/Feststoffstrahlen zu erhalten.

Die Erweiterung des Mündungsdurchmessers des ersten Rohres ist insbesondere bei einem unter Unterdruck oder Vakuum stehenden Schmelzgefäß vorteilhaft.

Gemäß einer vorteilhaften Ausgestaltungsformen ist/sind das/die Düsenrohr(e) verschleißfest ausgeführt.

Die verschleißfeste Ausführung der Düsenrohre ist bevorzugterweise so gestaltet, daß das jeweilige Rohr aus einem legierten Stahl mit Chromcarbiden oder aus einem hartverchromten Stahl oder aus hartverchromtem Kupfer oder aus Kupfer bzw. einem Stahl gefertigt ist, der innen- und gegebenenfalls außenseitig mit einem Keramikeinsatz bzw. -überzug versehen ist.

Diese verschleißfesten Ausführungen gestatten es, abrasive Medien, wie beispielsweise feinkörnige Kohle, Metalloxide, Schlackenbildner und dgl. durch die Düsenrohre mittels eines Trägergases in bzw. auf die Schmelze bzw. Schlacke zu blasen, ohne dadurch die Lebensdauern der Düsenrohre wesentlich zu verkürzen.

Eine weitere vorteilhafte Ausführungsform der Multifunktionslanze besteht darin, daß dem/den Düsenrohr(en) an jenem Ende, welches dem Kopf der Multifunktionslanze abgewandt ist, eine Feststoffverteilkammer zugeordnet ist, wobei die Feststoffverteilkammer von einem allseitig umschlossenen, ringförmigen, im wesentlichen zylindrischen Hohlkörper mit einem Boden, einer Abdeckung und einer seitlichen Begrenzung gebildet wird und wobei das/die Düsenrohr(e) den Boden der Feststoffverteilkammer () von unten durchstoßen und wobei mindestens eine Feststoffzufuhr tangential in die seitliche Begrenzung der Feststoffverteilkammer mündet.

Zusätzlich zur obigen Ausführungsform ist bevorzugterweise ein weiterer ringförmiger, im wesentlichen zylindrischer Hohlkörper vorgesehen, wobei der weitere Hohlkörper oben offen ist und einen Boden und eine seitliche Begrenzung aufweist und wobei der weitere Hohlkörper derart innerhalb der Feststoffverteilkammer angeordnet ist, daß zwischen der Abdeckung der Feststoffverteilkammer und der seitlichen Begrenzung des weiteren Hohlkörpers ein Spalt verbleibt und wobei das/die Düsenrohr(e) in den Boden des weiteren Hohlkörpers münden(n).

Feststoff wird in die Feststoffverteilkammer tangential eingeblasen und strömt durch den Spalt über eine Zwischenwand, die von der seitlichen Begrenzung des weiteren Hohlkörpers gebildet wird, in einen Raum, von dem die Düsenrohre wegführen (d.h. in den weiteren Hohlkörper). Der Einlauf zu den Düsenrohren ist konisch gestaltet und - wie die Düsenrohre selbst - verschleißfest ausgeführt.

Die Feststoffverteilkammer ist mit einem Schnellverschluß oder einem Flansch am Lanzenkörper befestigt und ist - nach Lösen des Verschlusses - abziehbar. Die verschleißfesten Düsenrohre sind in einem den Boden der Feststoffverteilkammer bildenden Ring befestigt und können leicht ausgetauscht werden.

Die Feststoffverteilkammer der Multifunktionslanze ist zweckmäßigerweise mit einer Trägergasversorgung, insbesondere einer Inertgasversorgung, sowie mit einer oder mehreren Feststoffversorgungen verbunden.

Alternativ dazu, d.h. wenn keine Feststoffverteilkammer vorgesehen ist, sind die Düsenrohre selbst mit einer Trägergasversorgung, insbesondere einer Inertgasversorgung, sowie mit einer oder mehreren Feststoffversorgungen verbunden.

Zur weiteren Versorgung der Multifunktionslanze mit Trägergas sind das erste Rohr, sowie der erste, der zweite, der dritte und der fünfte Ringspalt jeweils mit einer Trägergasversorgung, insbesondere einer Inertgasversorgung verbunden.

Trägergas bzw. Inertgas kann je nach aktuell durchgeführtem Verfahrensschritt als Injektorgas zur Kohlenstoff- oder Feststoffeindüsung oder zum Einstellen eines definierten Sauerstoffgehalts des während eines Schneid- und Schmelz-, Frisch- oder Verbrennungsschrittes zugeführten sauerstoffhältigen Gases dienen. Weiters kann die Multifunktionslanze vor ihrem Einsatz im erfindungsgemäßen Verfahren, bzw. die zum jeweiligen Zeitpunkt ungenutzten Blasquerschnitte mit einem geringen Inertgasstrom oder Luft gespült und frei von Metallspritzern gehalten werden.

Zur Versorgung der Multifunktionslanze mit allen übrigen, für die Verfahrensschritte erforderlichen Gasen, sind das erste Rohr, sowie der erste, der dritte und der fünfte Ringspalt jeweils mit einer Sauerstoffversorgung, einer Luftversorgung, sowie gegebenenfalls einer Dampfversorgung verbunden und der zweite Ringspalt mit einer Brennstoffversorgung - für die Versorgung mit flüssigem und/oder gasförmigem Brennstoff- verbunden.

Zusätzlich oder alternativ zur Sauerstoff- und/oder Luftversorgung können der erste und/oder der fünfte Ringspalt mit einer Heißwindversorgung versehen sein. Unter Heißwind ist dabei ein sauerstoffhältiges Gas, beispielsweise mit Sauerstoff angereicherte Luft, mit einer Temperatur von 200 bis etwa 1200 °C zu verstehen.

Vorteilhafterweise ist die Zufuhr von Gasen zu der Multifunktionslanze durch eine Einstellung des Vordrucks des jeweiligen Gases regelbar.

Alternativ oder zusätzlich dazu ist die Zufuhr von Gasen zu der Multifunktionslanze mittels einfacher starrer Blenden und/oder Schnellschlußventilen, welche jeweils in den einzelnen Gasleitungen angeordnet sind, einstellbar.

Allen Ausführungsformen der Multifunktionslanzen ist gemeinsam, daß durch das erste Rohr und/oder den ersten Ringspalt - wie an sich bekannt - elektromagnetische Wellen, insbesondere im Bereich des sichtbaren Lichts und des daran angrenzenden Infrarotbereichs, welche von einer Metallschmelze emittiert werden, mittels eines optischen Systems erfassbar und einem Detektor zur Bestimmung der Temperatur und/oder der chemischen Zusammensetzung der Metallschmelze zuführbar sein können.

Während einer solchen Messung wird durch das erste Rohr und/oder den ersten Ringspalt bevorzugt mit Inertgas geblasen, die Brennerfunktion der Multifunktionslanze kann dabei eingeschaltet bleiben. Die Auswertung der elektromagnetischen Wellen zur Bestimmung von Temperatur und/oder chemischer Zusammensetzung der Metallschmelze kann dabei auf pyrometrischem und/oder spektrometrischem Wege erfolgen. Ein ähnliches Verfahren wurde bereits in der WO 97/22859 vorgeschlagen, mit dem Unterschied, daß hier nicht - wie in der WO 97/22859 - unter Bad gemessen wird.

Die Multifunktionslanzen- sowohl die Ausführungsform für kleinere, als auch die für größere Feststoffmengen - werden vorteilhafterweise so angeordnet, daß sie entlang ihrer Längsachse verschiebbar und/oder schwenkbar sind. Damit kann einerseits die Eindringtiefe der jeweiligen Gasstrahlen in die Schmelze gesteuert werden und die Laufstrecke der Gasstrahlen bei veränderlicher Höhe der Badoberfläche eingestellt werden und andererseits ein größerer Bereich der Badoberfläche erreicht bzw. überstrichen werden.

Es hat sich weiters als vorteilhaft erwiesen, eine Multifunktionslanze unterhalb eines in Richtung des Inneren des metallurgischen Gefäßes ausgebauchten Kupferpaneels anzuordnen, wobei die Multifunktionslanze verschiebbar und/oder schwenkbar bleibt, da die Multifunktionslanze dadurch besonders gut geschützt wird.

Die Anzahl der für das erfindungsgemäße Verfahren in einem metallurgischen Gefäß verwendeten Multifunktionslanzen variiert mit der Art des metallurgischen Gefäßes und seiner Größe, sowie mit den Ausführungsformen der verwendeten Multifunktionslanzen . Es können eine bis zu 10 Multifunktionslanzen vorgesehen sein. Die bei größeren Anzahlen erhöhten Investitionskosten werden dadurch mehr als aufgewogen, daß über den gesamten Ofenraum bzw. die gesamte Schmelzenoberfläche die Energie-, Kohlenstoff- und Feststoffeinbringung und die Nachverbrennung weitgehend vergleichmäßigt erfolgt und die Produktivität des jeweiligen metallurgischen Gefäßes erhöht wird.

Bei größeren Anzahlen, beispielsweise 5 Multifunktionslanzen, ist es auch vorteilhaft, die Multifunktionslanzen kleiner dimensioniert auszuführen, so daß die Summe der Blasquerschnitte etwa die gleiche ist, wie bei der Verwendung einer geringeren Anzahl von Multifunktionslanzen, beispielsweise von nur 2 Multifunktionslanzen.

Im folgenden werden der Elektroofen und der Konverter als typische, aber nicht einschränkende Beispiele zur Beschreibung der Erfindung herangezogen.

Sofern nicht anders angegeben, beziehen sich die nachstehenden Ausführungen auf ein Verfahren mit Multifunktionslanzen zum Einblasen größerer Feststoffmengen.

Zur Vereinfachung der Terminologie werden erstes Rohr, erster, zweiter, dritter und fünfter Ringspalt, sowie die Düsenrohre, mitsamt dem jeweils zugehörigen Mündungsteil bzw. den Ausströmkanälen im folgenden als Düse1, Düse2, Düse3, Düse4, Düse5 und Düse6 bezeichnet.

Es werden eine oder - bei größeren Öfen - mehrere Multifunktionslanzen oberhalb der Badoberfläche, gemessen vor dem Abstich der Schmelze, bevorzugt in der Seitenwand, im Erkerbereich oder auch vom Ofendeckel aus blasend angeordnet. Die Längsachse der Multifunktionslanze soll bei Anordnung in der Seitenwand oder im Erkerbereich eine Neigung zur Badoberfläche von größer als 35° aufweisen. Die Multifunktionslanze ist in der Regel stationär angeordnet. Bei einer Anordnung in Elektroöfen mit langen Steinen in der Schlackenzone oder manchmal auch im Erkerbereich des Elektroofens ist eine linear verschiebbare mit oder ohne Schwenkmöglichkeit versehene Lanzenanordnung in der Seitenwand und/oder im Erkerbereich bzw. im Ofendeckel vorgesehen.

Je nach dem wie der E-Ofen mit dem Stand der Technik entsprechenden Brennern und/oder Nachverbrennungslanzen ausgerüstet ist, werden die Multifunktionslanzen bevorzugt im Bereich der kälteren Ofenbereiche (cold spots) bzw. Erker eingesetzt. Prinzipiell können die Multifunktionslanzen jedoch an allen Stellen des Ofenumfanges bzw. aus dem Ofendeckel niederfahrend eingesetzt werden. Bei Elektroöfen die mit großen Eisenschwammengen durch ein fünftes Deckelloch beispielsweise kontinuierlich chargiert werden, ist eine derartige Anordnung vorteilhaft, bei der die Strahlen aus den Multifunktionslanzen in der Nähe der Auftreffstelle des Eisenschwammes auf der Schmelze auftreffen, da dort Energie dringend benötigt wird, CO entsteht und nachverbrannt werden kann, sowie die FeO-Bildung durch das Kohleeinblasen vermindert wird.

In Hinblick auf die Höhe der Lanzenposition in der Seitenwand ist festzuhalten, daß die Laufstrecke z. B. des Strahles aus Düse2 unter 2 m sein soll, wenn das definierte Frischen der Schmelze und somit das Eindringen des Sauerstoffstrahls in die Schmelze wichtig ist. Im Erker des E-Ofens ist die Laufstrecke der Strahlen meistens unter 1,2 m. Im Konverter oder ähnlichen Reaktoren können die Laufstrecken der Strahlen auch wesentlich länger als 2 m sein.

Zur Optimierung des Elektrodenverbrauches werden die Multifunktionslanzen, wenn diese in der Seitenwand angeordnet sind, bevorzugt tangential zu einem gedachten Zylinder angeordnet. Der Zylinderdurchmesser liegt zwischen Elektrodenteilkreis und Ofenwand.

Die Multifunktionslanze wird bevorzugt in ein intensiv gekühltes, etwa quadratisches Kupferpannel mit einer Seitenlänge von etwa 0,5 m eingesetzt. Dadurch wird die Lebenszeit der Umgebung der Lanze verlängert. Dies ist insbesondere dann wichtig wenn z.T. große Schrottstücke im Einsatz sind und die Vorwärmzeit beim Blasen mit Sauerstoff aus Düse4 und Brennstoff aus Düse3 kurz gehalten wird. Dann kann insbesondere der Sauerstoffstrahl aus Düse5 oder auch Düse2 umgelenkt werden und kurzzeitig eine Teilmenge das Paneel streifen, wie dies auch bei herkömmlichen Brennern vorkommen kann. Der Einbau der Multifunktionslanze unterhalb eines in Richtung des Ofeninneren keilförmig ausgebauchten Kupferpaneels hat sich als besonders vorteilhaft erwiesen, da die Lanze dadurch besonders gut geschützt wird.

Die Arbeitsweise mit der Multifunktionslanze kann wie folgt beschrieben werden:

In der Warteposition sind die Düsen mit den Medien Luft (Düse1), Luft (Düse2), $N_2$ (Düse3), Luft (Düse4) und Luft (Düse5) mit Minimalmengen, die z.B. bei 0,2 bar fließen, beaufschlagt.

Beim Chargieren wird der Druck an den Düsen kurzzeitig auf ca. 1,5 bar erhöht, wenn die Lanze beim Chargieren Spritzern aus dem Ofenraum ausgesetzt ist.

Nach dem Chargieren von Eisenträgern, wie Schrott und/oder Gußeisen, von Stückkohle, direkt reduziertem Eisen, Schlackenbildnern usw. wird die Multifunktionslanze von den Freihaltemengen (unter 1 bar Vordruck) kommend schrittweise aktiviert und für die verschiedenen Zwecke genutzt. Der zeitliche Ablauf der Verfahrensschritte hängt jedoch u.a. auch von der Stückigkeit der Einsatzstoffe dem geplanten Verlauf des Kohlenstoffgehaltes der Schmelze, den Gehalten an Metalloxiden in der Schlacke, der notwendigen Entphosphorung der Schmelze usw. ab und kann variieren. Im Extremfall werden alle Funktionen von Anfang an eingeschaltet und die Lanze eine Zeitlang konstant betrieben.

Bei durchschnittlichen Einsatzstoffen - üblichem Schrott - ist die typische Arbeitsweise folgende:

Zuerst wird - nach dem Zünden des Lichtbogens und dem Flammen im Abgaskrümmer - Sauerstoff durch Düse4 eingeschaltet und unmittelbar danach der Brennstoff wie z.B. Erdgas (0,6 bis 7 $Nm^3$/min) aus Düse3 dazugeschaltet. Der Schrott wird vor der Lanze vorgeheizt (Brennerfunktion).

Nach kurzer Zeit, die vom verwendeten Schrottmix abhängt, wird nach beispielsweise 2 min ein mittlerer Sauerstoffdurchfluß aus Düse2 zum Schneiden und oxidierenden Schmelzen des Schrottes eingeschaltet. Je nach vorberechneter $O_2$-Menge für das Frischen wird nach Bildung eines beispielsweise 20 cm tiefen Metallsumpfes mit einer höheren Sauerstoffmenge mit einem durch das erste Rohr gesteuerten Impuls des Sauerstoffstrahles die Schmelze entkohlt. Die Brennerfunktion bleibt dabei in den meisten Anwendungsfällen eingeschaltet, um die Effektivität des Schmelzens und Entkohlens und des partiellen Oxidierens der Schmelze zu optimieren.

Die brennbaren Ofengase werden nach dem Zuschalten des Sauerstoffs aus Düse5 in die einzelnen Sauerstoffstrahlen angesaugt und teilweise verbrannt. Die dabei freiwerdende Energie wird mit hohem Wirkungsgrad an den Schrott, die Schlacke und Schmelze übertragen und geht nicht an das Abgassystem verloren. Dieses wird sogar wärmetechnisch entlastet. Die Sauerstoffstrahlen aus Düse5, d.h. 2 bis 16 Stück pro Multifunktionslanze, blasen windschief von der Längsachse der Lanze weg in das Schrottlaufwerk nach unten.

Bei einer Lanze für kleine Feststoffeinblasraten kann die zentrale Düse1, wenn ein spezielles Umschaltventil am Eingang zur Düse eingebaut ist, von Luft auf Sauerstoffbetrieb und nach Spülen mit Stickstoff auf z.B. Kohleeinblasen umgeschaltet werden. Wenn ein großer Bedarf an Sauerstoff zum Frischen besteht, wird die Kohleeindüsung abgestellt, die Düse1 mit Hilfe des Umschaltventils mit $N_2$ gespült und die Düse1, sowie auch die Düse2 mit einem vorgegebenen Sauerstoffdurchfluß beaufschlagt.

Die Sauerstoffmenge durch die Düse2 beträgt je nach Ofengröße und Anzahl der Multifunktionslanzen 400 bis 3000 $Nm^3$ pro Stunde. Durch die Düsen6 werden je $mm^2$ Blasquerschnitt bis zu 0,3 kg Kohle/min geblasen. Je nach Fahrweise kann die Schmelze also entweder schnell entkohlt oder sogar aufgekohlt werden. Durch eine Düse6 mit einer Nennweite von 12 mm können z.B. bis zu 34 kg Kohle/min beim Blasen mit niedrigen $O_2$-Mengen durch Düse2 geblasen werden. Durch das Kohleblasen wird die Schlacke sehr schnell und intensiv zum Schäumen gebracht, die FeO-Gehalte in den Schlacken auf einem niedrigen Niveau von bis zu unter 20 % stabilisiert und auch bei Kohlenstoffgehalten der Schmelze von beispielsweise 0,04% die Sauerstoffgehalte im Stahl von etwa 1000 auf etwa 600 ppm erniedrigt. Dies führt u.a. auch zu niedrigeren Verbräuchen an Legierungsmitteln und zu einem reineren Stahl.

Diese Effekte können durch Spülen der Schmelze mit gut regelbaren Spüldüsen, die mit Stickstoff und/oder Argon plus CH$_4$ beaufschlagt werden, verstärkt werden.

Wenn niedrige Kohlenstoffgehalte der Schmelze von beispielsweise 0,03 % eingestellt werden müssen und die Schlacke auch in der Überhitzungsperiode der Schmelze schäumen muß, wird die Kohle durch Düsen6 nur mit sehr niedrigem Druck und kleiner Menge/min auf die Schlacke aufgeblasen und danach wieder gefrischt.

Wenn der Schmelze bzw. - zum Konditionieren - der Schlacke kurzzeitig größere Kohlenstoffmengen zugeführt werden sollen, werden durch die Düse2 Inertgas, Luft oder kleine Sauerstoffmengen und durch Düse6 große Kohlemengen geblasen. Der Druck am Eingang zur Düse6 erhöht sich mit dem Kohleeinblasen (oder auch Feststoffeinblasen) nach folgender Faustformel:

$$f = \sqrt{\frac{1,4 + B}{1,4}} \; ;$$

Dabei stellt f den Faktor für die Druckerhöhung bei konstanter Trägergasmenge und B die Beladung des Trägergases in kg/Nm$^3$ dar.

Insbesondere bei Cr-legierten Schmelzen ist die Verminderung des CO-Partialdruckes und somit der Cr-Verschlackung bei Kohlenstoff-Gehalten von beispielsweise unter 1 % durch Zumischung von Inertgas oder Dampf zum Sauerstoff aus Düse1, Düse2 und Düse4 besonders vorteilhaft.

Dadurch können Kohlenstoffgehalte von bis zu unter 0,4 % wirtschaftlich, d.h. bei geringer Verschlakkung der Legierungselemente, bei niedriger Temperatur und hoher Produktivität, hergestellt werden. Eine nachgeschaltete VOD-Behandlung (Vacuum Oxygen Degassing) wird dadurch wesentlich verkürzt und die gesamte Produktivität der Verfahrensroute EAF mit Multifunktionslanze(n) und VOD wird wesentlich erhöht. Auch das Bodenblasen mittels Sauerstoff und Inertgas bzw. Dampf in Kombination mit den Multifunktionslanzen ist eine besonders geeignete Kombination zur Erzeugung von legiertem Stahl - wie z.B. rostfreiem Stahl - im EAF unter Anwendung des gegenständlichen Verfahrens. Im Extremfall kann rostfreier Stahl in solch einem EAF auch ohne VOD-Behandlung erzeugt werden.

Die Multifunktionslanzen, sowie das Verfahren unter Verwendung derselben werden nachfolgend in den Zeichnungen Fig. 1 bis Fig. 9 näher erläutert.

Die Zeichnungen Fig. 1 bis Fig. 3 veranschaulichen dabei die Multifunktionslanze für das Einblasen relativ **kleiner** Feststoffmengen:

**Fig. 1** veranschaulicht einen verkleinerten Längsschnitt, der durch die zentrale Längsachse der Multifunktionslanze gelegt ist,

**Fig. 2** zeigt den Kopf der Multifunktionslanze,

**Fig. 3** ist eine Ansicht des in Fig. 2 dargestellten Kopfes in Richtung des Pfeiles I der Fig. 2

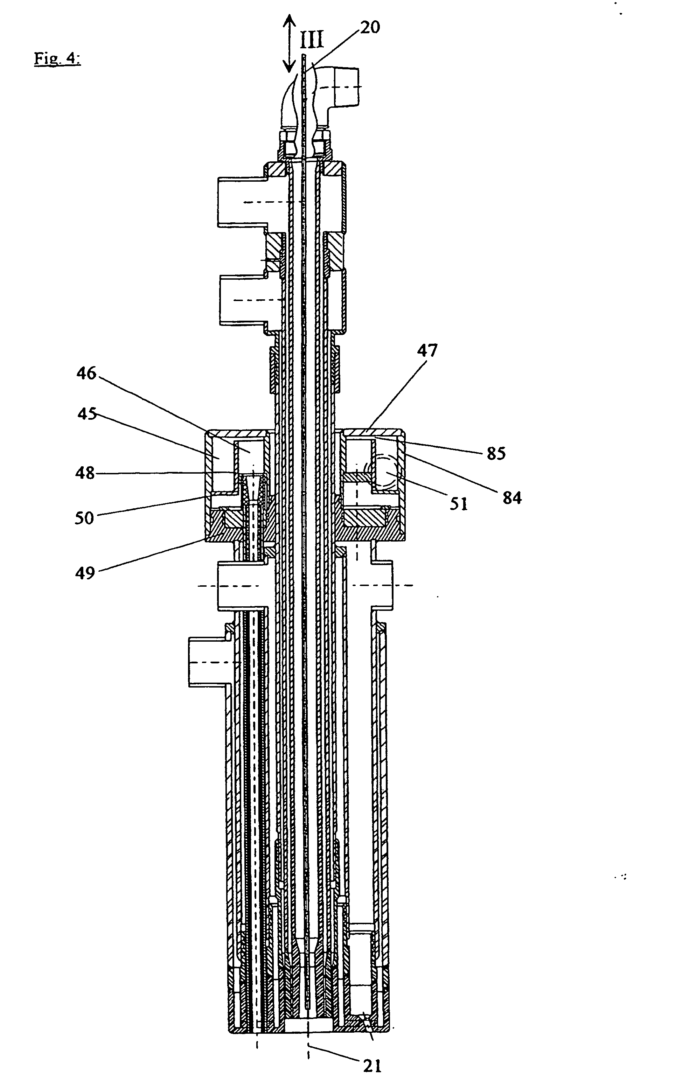

Die Zeichnungen Fig. 4 bis Fig. 7 stellen die erfindungsgemäßen Multifunktionslanze für das Einblasen relativ **großer** Feststoffmengen dar.

**Fig. 4** veranschaulicht in einem verkleinerten Längsschnitt den gesamten Aufbau dieser Lanze, während

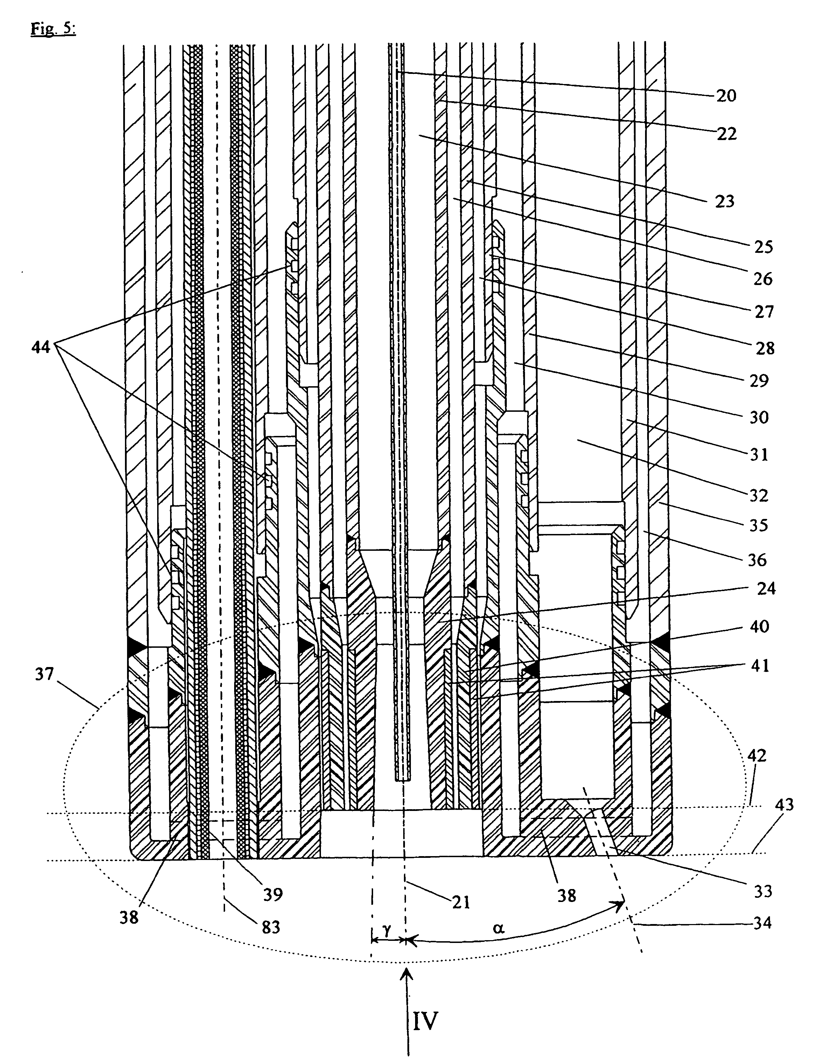

**Fig. 5** den Kopf der Multifunktionslanze darstellt.

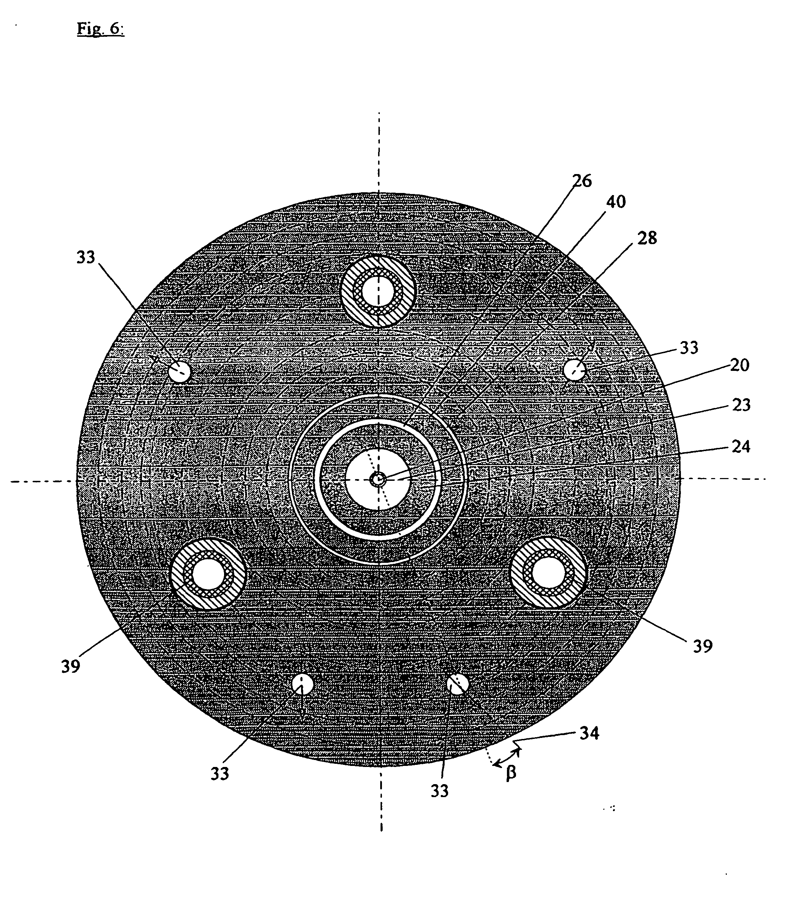

In **Fig. 6** ist einer Ansicht des in Fig. 5 dargestellten Kopfes in Richtung des Pfeiles IV zu sehen.

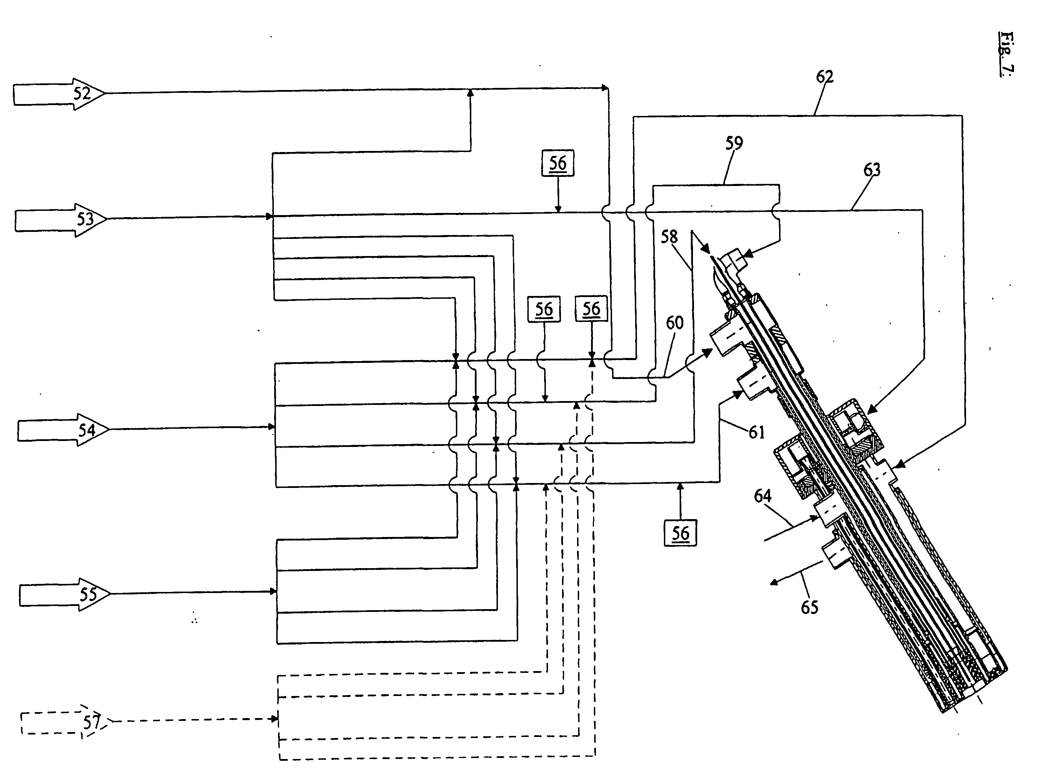

**Fig. 7** stellt die Multifunktionslanze für relativ große Feststoffmengen mitsamt den Gasversorgungsleitungen dar,

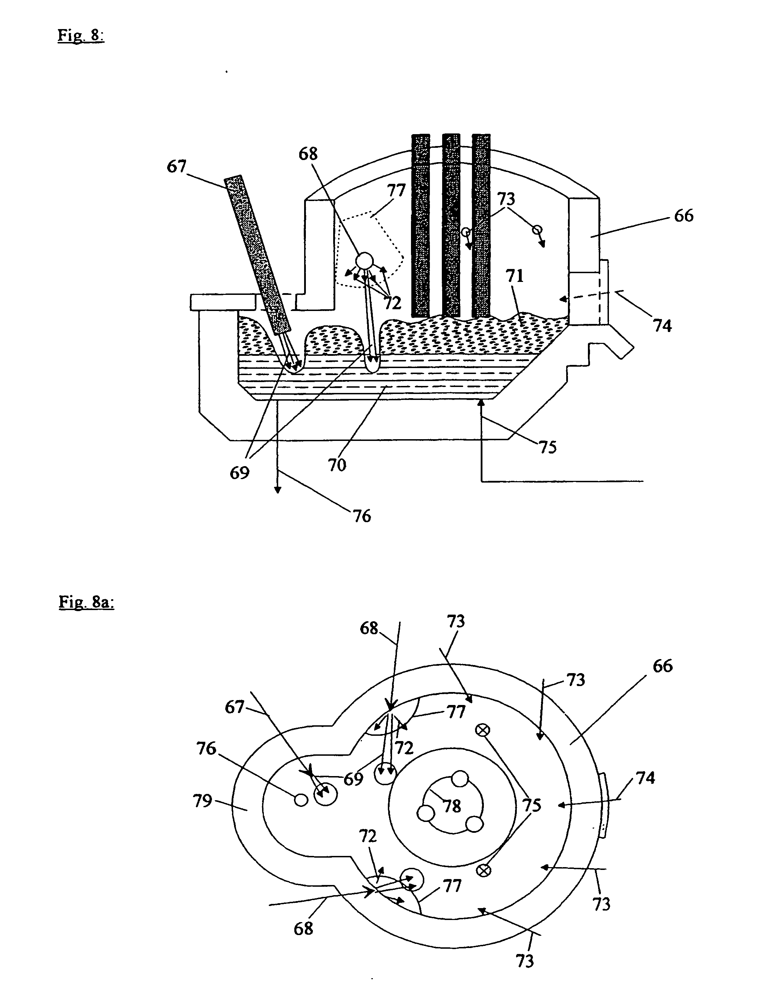

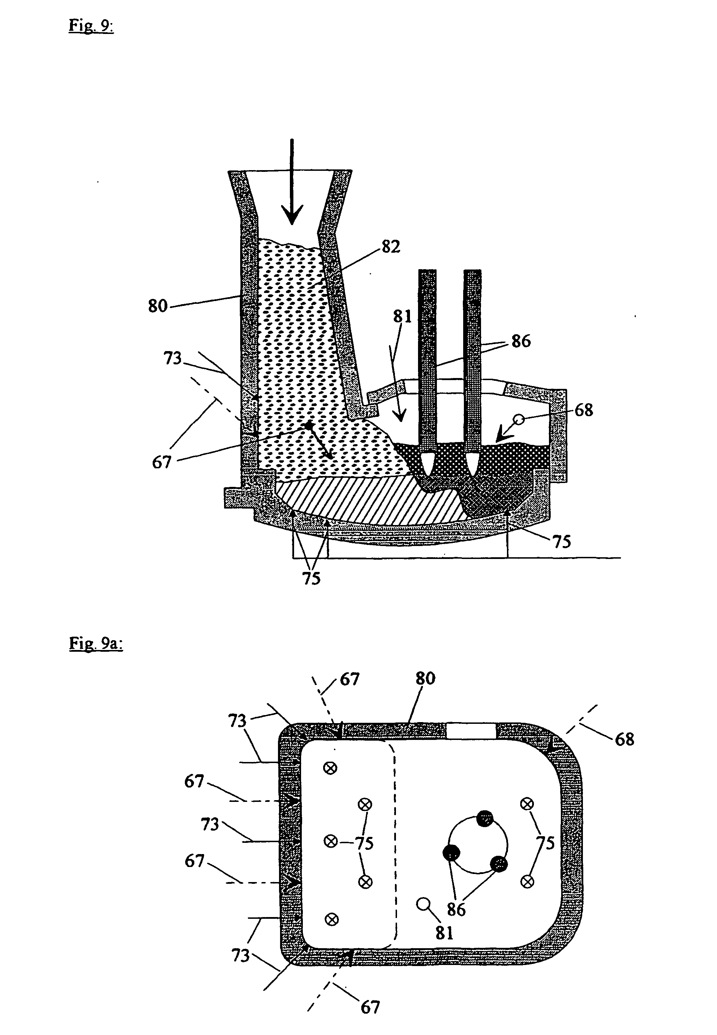

**Fig. 8** und **Fig. 9** zeigen den Einbau erfindungsgemäßer Multifunktionslanzen in metallurgische Gefäße.

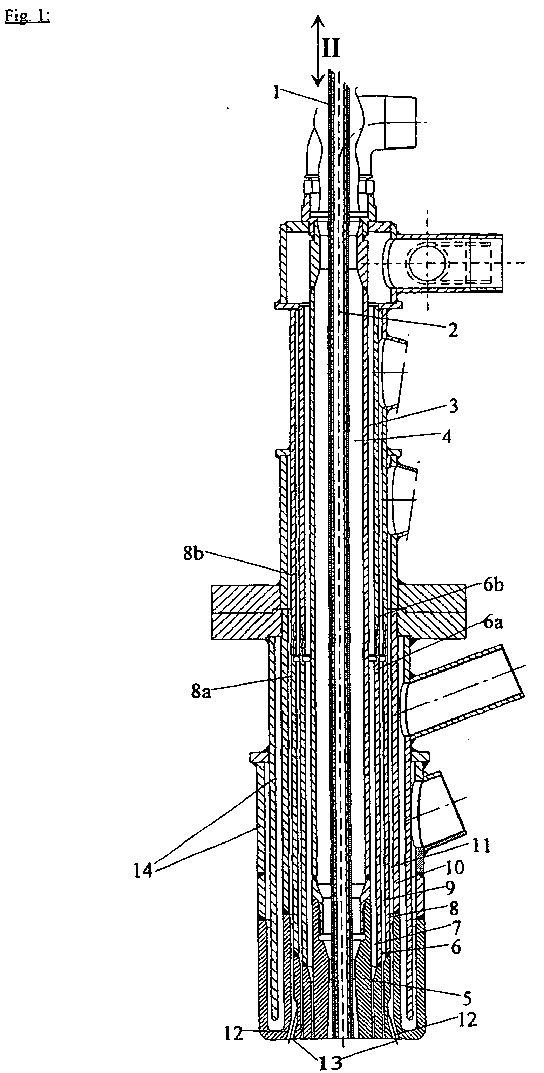

Die in **Fig. 1** dargestellte Multifunktionslanze weist ein erstes Rohr 1 auf, welches insbesondere für die Zufuhr fester, feinkörniger bis staubförmiger Substanzen, welche pneumatisch förderbar sind, verwendet wird. Dieses erste Rohr 1 erstreckt sich in Richtung der zentralen Längsachse 2 der Multifunktionslanze und ist von einem zweiten Rohr 3 umgeben, durch welches zwischen dem ersten und dem zweiten Rohr ein erster Ringspalt 4 gebildet wird, durch welchen insbesondere sauerstoffhältiges Gas zugeführt wird.

Die Innenseite des zweiten Rohres 3 ist am Mündungsende, das von einem eigenen, vom zweiten Rohr 3 leicht durch eine Schraubverbindung lösbaren Mündungsteil 5 gebildet wird, lavaldüsenartig ausgebildet, so daß das sauerstoffhältige Gas bzw. der Sauerstoff mit Überschallgeschwindigkeit aus dem Mündungsteil 5 austritt.

Das zweite Rohr 3 ist von einem dritten Rohr 6 umgeben, so daß zwischen zweitem und drittem Rohr ein zweiter Ringspalt 7 ausgebildet ist, durch welchen gasförmiger und/oder flüssiger Brennstoff zugeführt wird.

Ein viertes Rohr 8 umgibt das dritte Rohr 6, so daß zwischen drittem und viertem Rohr ein dritter Ringspalt 9 ausgebildet ist, durch welchen wiederum insbesondere sauerstoffhältiges Gas zugeführt wird.

Das vierte Rohr 8 ist weiters von einem fünften Rohr 10 umgeben, so daß zwischen viertem und fünftem Rohr ein vierter Ringspalt 11 ausgebildet ist, durch welchen insbesondere sauerstoffhältiges Gas zugeführt wird.

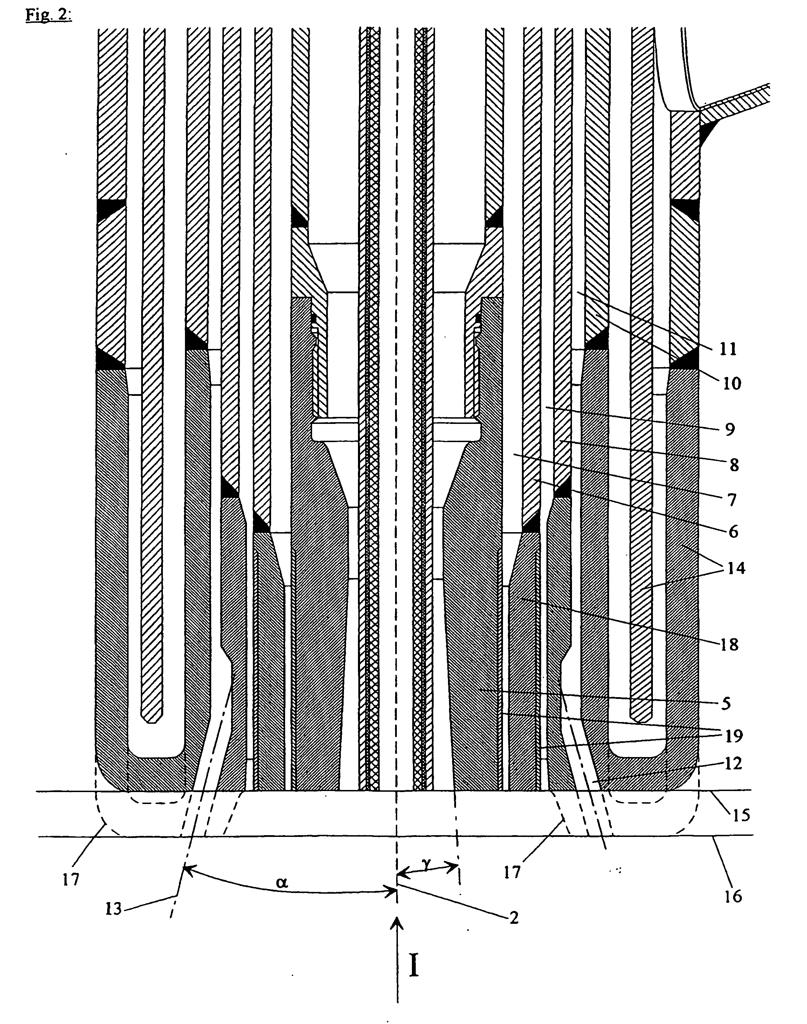

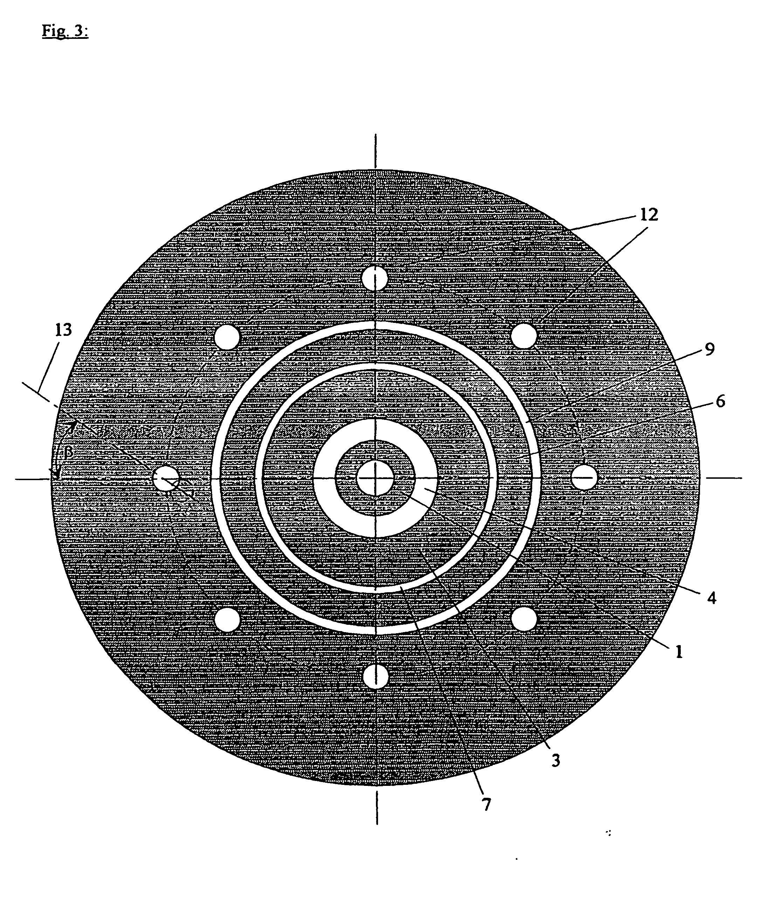

Der vierte Ringspalt 11 endet mündungsseitig in mehreren Ausströmkanälen 12. Die Mittelachsen 13 der Ausströmkanäle 12 stehen windschief zur Längsachse 2 der Multifunktionslanze. Die Normalprojektion der Mittelachse 13 jeweils eines Ausströmkanals 12 auf eine durch die zentrale Längsachse 2 und durch die Mündung des Ausströmkanals 12 gelegte Ebene (die in der Zeichnung **Fig. 2** mit der Zeichnungsebene identisch ist) schließt mit der zentralen Längsachse 2 einen Winkel α von 2,5 bis 25° ein. Als Maß für die Windschiefe schließt die Normalprojektion der Mittelachse 13 jeweils eines Ausströmkanals 12 auf eine normal zur zentralen Längsachse 2 gerichtete Ebene (wobei diese Ebene in **Fig. 3** mit der Zeichnungsebene identisch ist und diese Normalprojektion mit der Mittelachse in der gewählten Ansicht von Fig. 3 zusammenfällt) mit einer durch die Längsachse 2 und die Mündung des Ausströmkanals gelegten Ebene einen Winkel β von 2,5 bis 60° ein.

Dadurch wird das durch die Ausströmkanäle 12 eingeblasene sauerstoffhältige Gas und in der Folge auch die in diese Sauerstoffgasstrahlen eingesaugten Abgase des metallurgischen Gefäßes in eine schraubenlinienförmige Mischbewegung versetzt und die Abgase in die Sauerstoffgasstrahlen eingesogen. Dies führt zu einer effizienten Vermischung des sauerstoffhältigen Gases und der Abgase und zu deren weitestgehender Nachverbrennung.

Das fünfte Rohr 10 ist außen von einem wassergekühlten Doppelmantel 14 umgeben, welcher üblicherweise in der gleichen Mündungsebene 15 endet wie das erste, zweite und dritte Rohr 1,3,6 bzw. deren Mündungsteile. Das vierte 8 und fünfte Rohr 10 können gemeinsam mit dem wassergekühlten Doppelmantel 14 in einer zweiten Mündungsebene 16 enden, wobei die erste hinter die zweite Mündungsebene zurückgesetzt ist (strichliert dargestellt 17).

Die Mündungsteile 5,18 des zweiten 3 und dritten 6 Rohres sind an ihrer Ausßenseite mit mehreren Schlitzen 19 versehen, wodurch eine verstärkte Kühlwirkung der durch zweiten 7 und dritten 9 Ringspalt zugeführten Gase erzielt wird.

Das erste Rohr 1 ist innen verschleißfest ausgeführt. Dazu weist es innenseitig einen Keramikeinsatz auf. Das erste Rohr 1 kann auch entlang der zentralen Längsachse verfahren werden, wie dies durch Pfeil II angedeutet ist, beispielsweise mittels eines pneumatischen Antriebes.

Sowohl das dritte 6 als auch das vierte Rohr 8 sind in ihrer Länge geteilt und die jeweiligen Rohrteile 6a,6b bzw. 8a,8b mittels Schraubverbindungen aneinander befestigt. Dadurch können die Rohrteile 6b und 8b im Fall einer Reparatur rasch ausgetauscht werden. Die Abdichtung erfolgt beispielsweise mittels O-Ring.

Die in **Fig. 4** dargestellte Multifunktionslanze weist ein erstes Rohr 20 auf, welches insbesondere für die Zufuhr sauerstoffhältigen Gases verwendet wird. Dieses erste Rohr 20 erstreckt sich in Richtung der zentralen Längsachse 21 der Multifunktionslanze und ist von einem zweiten Rohr 22 umgeben, durch welches zwischen dem ersten und dem zweiten Rohr ein erster Ringspalt 23 gebildet wird, durch welchen wiederum insbesondere sauerstoffhältiges Gas zugeführt wird.

Bei der Zuführung von sauerstoffhältigem Gas durch das erste Rohr 20 dient dieses hauptsächlich zum Steuern des Impulses des Gasstrahls aus dem ersten Ringspalt 23, bzw. zum Steuern des FeO-Gehalte von Schlacken. Dazu ist das erste Rohr 20 entlang der zentralen Längsachse 21 verfahrbar, wie dies durch Pfeil III angedeutet ist, beispielsweise mittels eines pneumatischen Antriebes. Mit dem ersten Rohr 20 ist aber auch ein Flüssigkeitseinblasschritt durchführbar.

Die Innenseite des zweiten Rohres 22 ist am Mündungsteil 24 lavaldüsenartig ausgebildet, so daß das sauerstoffhältige Gas bzw. der Sauerstoff mit Überschallgeschwindigkeit aus dem Mündungsteil 24 austritt.

Das zweite Rohr 22 ist von einem dritten Rohr 25 umgeben, so daß zwischen zweitem und drittem Rohr ein zweiter Ringspalt 26 ausgebildet ist, durch welchen gasförmiger und/oder flüssiger Brennstoff zugeführt wird.

Ein viertes Rohr 27 umgibt das dritte Rohr 25, so daß zwischen drittem und viertem Rohr ein dritter Ringspalt 28 ausgebildet ist, durch welchen wiederum insbesondere sauerstoffhältiges Gas zugeführt wird.

Das vierte Rohr 27 ist weiters von einem fünften Rohr 29 umgeben, so daß zwischen viertem und fünftem Rohr ein vierter Ringspalt 30 ausgebildet ist, durch welchen Kühlwasser zugeführt wird.

Das fünfte Rohr 29 ist weiters von einem sechsten Rohr 31 umgeben, so daß zwischen fünftem und sechstem Rohr ein fünfter Ringspalt 32 ausgebildet ist, durch welchen insbesondere sauerstoffhältiges Gas zugeführt wird.

Der fünfte Ringspalt 32 endet mündungsseitig in mehreren Ausströmkanälen 33. Die Mittelachsen 34 der Ausströmkanäle 33 stehen windschief zur Längsachse 21 der Multifunktionslanze. Die Normalprojektion der Mittelachse 34 jeweils eines Ausströmkanals 33 auf eine durch die zentrale Längsachse 21 und durch die Mündung des Ausströmkanals 33 gelegte Ebene (die in der Zeichnung **Fig. 5** mit der Zeichnungsebene identisch ist) schließt mit der zentralen Längsachse 21 einen Winkel α von 2,5 bis 25° ein. Als Maß für die Windschiefe schließt die Normalprojektion der Mittelachse 34 jeweils eines Ausströmkanals 33 auf eine normal zur zentralen Längsachse 21 gerichtete Ebene (wobei diese Ebene in **Fig. 6** mit der Zeichnungsebene identisch ist und diese Normalprojektion mit der Mittelachse in der gewählten Ansicht von Fig. 6 zusammenfällt) mit einer durch die Längsachse 21 und die Mündung des Ausströmkanals gelegten Ebene einen Winkel β von 2,5 bis 60° ein.

Dadurch wird das durch die Ausströmkanäle 33 eingeblasene sauerstoffhältige Gas und in der Folge auch die in diese Sauerstoffgasstrahlen eingesaugten Abgase des metallurgischen Gefäßes in eine schraubenlinienförmige Mischbewegung versetzt und die Abgase in die Sauerstoffgasstrahlen eingesogen. Dies führt zu einer effizienten Vermischung des sauerstoffhältigen Gases und der Abgase und zu deren weitestgehender Nachverbrennung.

Das sechste Rohr 31 ist außen von einem siebten Rohr 35 umgeben, wodurch ein sechster Ringspalt 36 gebildet wird, durch welchen Kühlwasser abgezogen wird.

Vierter 30 und sechster 36 Ringspalt sind mündungsseitig verschlossen ausgeführt und im Kopf 37 der Multifunktionslanze durch Bohrungen 38 verbunden. Vierter 30 und sechster 36 Ringspalt bilden zusammen mit den Bohrungen 38 einen wassergekühlten Doppelmantel, durch den während des Betriebes etwa 60 m³/Stunde Wasser fließen.

Innerhalb des fünften Ringspalts 32 verlaufen mehrere Düsenrohre 39 zum Zuführen von staubförmigen bis feinkörnigen Feststoffen, wobei in den Zeichnungen **Fig. 4** und **Fig. 5** wegen der gewählten Ansicht nur eines der Düsenrohre 39 im Querschnitt dargestellt ist. Die Düsenrohre 39 sind innen verschleißfest ausgeführt, wozu sie mit einem Keramikeinsatz versehen sind. Die Düsenrohre 39 münden im Kopf 37 der Multifunktionslanze bzw. durchstoßen diesen. Die Mündungen der Düsenrohre 39 sind hier zylindrisch, können aber auch leicht konisch erweitert oder lavaldüsenförmig ausgebildet sein.

In Sonderfällen, wenn auf den Einsatz der Ausströmkanäle 33 zur Nachverbrennung verzichtet wird, kann zusätzlich der gesamte fünfte Ringspalt 32 mit Trägergas und Feststoff beaufschlagt werden. Der Feststoff wird dann durch die Ausströmkanäle 33 geblasen, welche für diesen Fall verschleißfest ausgeführt sind.

Die Mündungsteile 24,40 des zweiten 22 und dritten 25 Rohres sind an ihrer Außenseite mit mehreren Schlitzen 41 versehen, wodurch eine verstärkte Kühlwirkung der durch zweiten 26 und dritten 28 Ringspalt zugeführten Gase erzielt wird.

Die Mündungsteile des vierten 27, fünften 29, sechsten 31 und siebenten 35 Rohres enden in einer ersten Mündungsebene 42. Die Mündungsteile 24,40 des zweiten 22 und dritten 25 Rohres enden in einer zweiten Mündungsebene 43, wobei die zweite etwas hinter die erste Mündungsebene zurückgesetzt ist.

Sowohl das vierte 27 als auch das fünfte Rohr 29 sind in ihrer Länge geteilt, das vierte Rohr 27 zwei- und das fünfte Rohr 29 einfach und die jeweiligen Rohrteile mittels Schraubverbindungen 44 aneinander befestigt. Dadurch können die jeweiligen Rohrteile im Fall einer Reparatur rasch ausgetauscht werden. Die Abdichtung erfolgt beispielsweise mit O-Ringen.

Die wassergekühlten Teile des Kopfes 37 der Multifunktionslanze, also die Mündungsteile des vierten bis siebten Rohres 27,29,31,35 sind bevorzugterweise aus Kupfer gefertigt und zwar entweder geschweißt, geschmiedet, bevorzugterweise aber gegossen. Nach dem Auftrennen von jeweils nur einer Schweißnaht können diese Teile leicht abgezogen und somit ersetzt werden.

Den Düsenrohren 39 ist, etwa in der Mitte der Multifunktionslanze, eine Feststoffverteilkammer 45 zugeordnet, welche als ringförmiger Hohlkörper ausgebildet ist und die Multifunktionslanze umschließt. Innerhalb der Feststoffverteilkammer 45 befindet sich ein weiterer ringförmiger Hohlkörper 46, welcher allerdings oben offen ausgeführt ist, wodurch zwischen der Abdeckung 47 der Feststoffverteilkammer 45 und der seitlichen Begrenzung 48 des weiteren ringförmigen Hohlkörpers 46 ein Spalt verbleibt. Die Düsenrohre 39 durchstoßen den Boden 49 der Feststoffverteilkammer 45 und münden in den Boden 50 des weiteren Hohlkörpers 46. In die Feststoffverteilkammer 45 mündet - zu dieser annähernd tangential - eine Feststoffzuführung 51. Eingeblasene Feststoffe verteilen sich in der Feststoffverteilkammer 45 und strömen über die - eine Art Überlauf bildende - seitliche Begrenzung 48 des weiteren Hohlkörpers 46 zunächst in diesen und dann in die Düsenrohre 39.

In der Zeichnung **Fig. 7** ist das Gas- und Feststoffversorgungssystem einer Multifunktionslanze (für relativ große Feststoffmengen) dargestellt.

Zur Versorgung mit allen für alle Anwendungsfälle erforderlichen Gasen und Feststoffen sind eine Brennstoffversorgung 52, eine Trägergasversorgung 53, eine Sauerstoffversorgung 54, eine Luftversorgung 55, eine oder mehrere Feststoffversorgungen 56 sowie - für spezielle Anwendungsfälle - eine Dampfversorgung 57 vorgesehen.

Als Brennstoff werden meist Kohlenwasserstoffe, wie Methan, Ethan, Propan oder Butan, CO oder Mischungen dieser Gase verwendet, je nach Verfügbarkeit kann sich aber auch die Verwendung flüssiger Brennstoffe, beispielsweise Heizöl, anbieten, wobei es - insbesondere bei zähflüssigen Ölen - von Vorteil ist, wenn der jeweilige Brennstoff vor seiner Verwendung vorgeheizt wird.

Als Trägergas werden typischerweise Inertgase wie Stickstoff, Argon oder Mischungen dieser Gase verwendet. Je nach Anwendungsfall sind aber auch andere Gase, beispielsweise Luft oder Erdgas, als Trägergas verwendbar.

Das erste Rohr 20, der erste 23, zweite 26, dritte 28 und fünfte 32 Ringspalt sind mit Gaszuleitungen 58,59,60,61,62 versehen, wobei der zweite Ringspalt 26 mit der Brennstoffversorgung 52 und der Trägergasversorgung 53 verbunden ist und die restlichen Ringspalte 23,28,32 sowie das erste Rohr 20 jeweils sowohl mit der Trägergas- 53, Sauerstoff- 54, Luft- 55 und, für spezielle Anwendungsfälle, mit der Dampfversorgung 57 verbunden sind.

Für die Kohle- und Feststoffeinblasfunktionen der Multifunktionslanze sind die Trägergaszuleitung 63 zur Feststoffverteilkammer 45, sowie - für Sonderfälle - die Gaszuleitungen 59,61,62 zum ersten, dritten und fünften Ringspalt jeweils mit Feststoffversorgungen 56 versehen, welche im Sinne einer weitestgehenden Funktionsvielfalt jeweils zu- und abgeschaltet werden können.

Die Hauptmenge der Feststoffe, und hier wiederum hauptsächlich Kohle, wird über die Düsenrohre 39 geblasen. Weitere Mengen an Feststoffen können aber in Ausnahmefällen auch jederzeit über einen oder mehrere der Ringspalte 23, 28 und 32 geblasen werden, wobei das jeweilig Trägergas zum Feststoffblasen Trägergas, Sauerstoff, Luft, Dampf oder Mischungen dieser Gase sein kann.

Die Multifunktionslanze, bzw. der vierte 30 und der sechste 36 Ringspalt sind weiters mit einem Kühlwasserzulauf 64 und einem Kühlwasserablauf 65 ausgestattet. Auf die Wasserkühlung selbst kann in manchen Anwendungsfällen verzichtet werden. So ist dies fallweise im Elektroofen auch ohne Aufgabe der hervorragenden Haltbarkeit des Lanzenkopfes möglich.

**Fig. 8** zeigt den vertikalen Schnitt durch einen Elektroofen 66 in dem Multifunktionslanzen 67,68 angeordnet sind. Es ist weiters das Eindringen der Strahlen 69 in die Schmelze 70 bzw. die Schlacke 71, sowie die Sauerstoffstrahlen (kurze Pfeile 72) für die Nachverbrennung der Ofenabgase dargestellt. Im Elektroofen 66 sind weiters herkömmliche Brenner/Nachverbrennungslanzen 75, sowie ein Türbrenner 74 und Bodenspüldüsen 75 angeordnet und ein Abstich 76 vorgesehen. Die Multifunktionslanzen 68 sind durch ein zum Ofeninneren hin vorgewölbtes Paneel 77 geschützt.

**Fig. 8a** stellt einen horizontalen Schnitt durch den Elektroofen 66 aus **Fig. 8** dar. Die Multifunktionslanzen 68 sind angenähert tangential zu einem zum Elektrodenteilkreis 78 konzentrischen Kreis angeordnet. Dadurch wird ein übermäßiger Elektrodenverbrauch bzw. vorzeitiger Verschleiß verhindert. Die weitere Multifunktionslanze 67 ist im Erker 79 des Elektroofens 66 angeordnet.

**Fig. 9** bzw. **Fig. 9a** stellen die Anordnung der Multifunktionslanzen 67,68 in einem Elektroofen 80 mit exzentrischem Schacht, die Brenner/Nachverbrennungslanzen 73, sowie Bodendüsen 75 dar. Eine weitere Multifunktionslanze 81 wird durch ein Hubwerk (in der Zeichnung nicht dargestellt), das außerhalb des Elektroofens 80 steht, in eine oder mehrere Positionen durch Öffnungen im Deckel in das Ofeninnere zum Blasen eingeführt. Bei diesem Ofentyp ist es besonders wichtig, daß sich der vorgewärmte und zum Teil bereits teigige Schrott 82 ohne Bärenbildung in Richtung der Elektroden 86 bewegt.

Dies ist besonders beeindruckend mit der dargestellten Düsenanordnung gelungen. Die Abstichzeiten konnten auf unter 40 min. und der Stromverbrauch auf unter 290 kWh/t Flüssigstahl erniedrigt werden. Dazu hat auch die durch den Ofendeckel eingeführte Multifunktionslanze beigetragen.

Ausführungsbeispiele:

In den nachfolgenden Beispielen werden wieder die Bezeichnungen Düse1, Düse2, Düse3, Düse4, Düse5 und Düse6 für das erste Rohr, den ersten, zweiten, dritten und fünften Ringspalt, sowie die Düsenrohre, bzw. deren jeweilige Mündungsteile verwendet.

Beispiel 1

In einem 115 t Elektroofen mit 80 MVA Transformatorleistung wurden 3 Multifunktionslanzen (49 und 50) wie in Figur 5 und 5a dargestellt, eingebaut. Der Ofen war auch noch mit 2 Bodenspüldüsen und 4 Stk. Nachverbrennungs-/Brennerlanzen 55 sowie einem Türbrenner 57 ausgerüstet.

Nach dem Chargieren des ersten Schrottkorbes mit 49 t Schrott, 19 t festem Roheisen und 1000 kg Stückkohle auf einen Metallsumpf von ca. 20 t, wobei die Düse 1, Düse2, Düse4 und Düse5 während des Chargierens mit Luft betrieben wurden, wurden die Düse3 und Düse4 mit 6 $Nm^3$ $O_2$/min (Düse4) bzw. 3 $Nm^3$ $CH_4$/min (Düse3) beaufschlagt. Nach 2 min. wurden Düse2 und Düse5 von Luft auf Sauerstoff umgeschaltet und mit 6 (Düse2) bzw. 4,5 $Nm^3$/min beaufschlagt. Durch Düse6 wurde Luft mit jeweils 5 kg/min feinkörniger Kohle geblasen, um das Schmelzen des Schrottes zu beschleunigen und die Schrottoxidation zu kontrollieren. 5 min. nach power on, also nach einer Vergrößerung der Menge an geschmolzenem Metall, wurde die Sauerstoffmenge der Düse2 auf 16 $Nm^3$/min erhöht und die Kohleförderung durch Düse1 auf 12 kg/min verdoppelt. Gegen Ende des Einschmelzvorganges für den ersten Korb wurde die Sauerstoffmenge durch Düse5 wieder zurückgenommen.

Mit dem zweiten Korb wurden 57 t Schrott chargiert und mit den Multifunktions- und den Nachverbrennungslanzen das gleiche Prozedere wie Vorwärmen, Schneiden, beschleunigtes Schmelzen und Nachverbrennen der Ofenabgase, sowie mit den Sauerstoffstrahlen der Düsen5 aus den 3 Multifunktionslanzen das intensive Frischen durchgeführt. Die beiden Bodendüsen 57 wurden mit jeweils 0,4 $Nm^3$ $N_2$/min und 0,2 $Nm^3$ $CH_4$/min, die in der Gasregelstation vorgemischt wurden, betrieben, allerdings während der beiden Flachbadperioden nur mit den halben Raten. Die Sauerstoffmengen durch alle Nachverbrennungslanzen 55 wurden der Abgasanalyse angepaßt, so daß der CO-Gehalt nicht über etwa 10 % im Abgas anstieg.

Das Kohleeinblasen wurde u.a. nach dem Bedarf für die Schaumschlackenbildung und für einen Kohlenstoffgehalt in der Schmelze von ca. 1580°C und ca. 0,30 % eingestellt. Während einer Periode von 3 min. wurde die Kohle durch eine granulierte Schredder-Leichtfraktion ersetzt. Das Schäumen der Schlacke funktionierte auch damit. In der Überhitzungsperiode wurde mit bis zu insgesamt 4500 $Nm^3O_2$/Stunde gefrischt. Währenddessen wurden die Nachverbrennungsdüsen (Düsen5) der Multifunktionslanzen 49 und 50 und der Brenner 55 mit Luft freigehalten. 2 min. vor dem Abstich und nach dem Abschlacken wurde nochmals intensiv mit Kohle bei minimaler Frischwirkung geblasen, um den Sauerstoffgehalt der Schmelze auf etwa 600 ppm zu erniedrigen.

Bei 0,3 % C in der Schmelze (meltdown) betrug der FeO-Gehalt in der Schlacke 18 % und somit war auch das Flüssigstahlausbringen mit 92 % hoch. Die Abstichfolgezeit und Schmelzleistung lagen bei 52 min., bzw. bei über 132 t/h. Die Verbräuche betrugen 39 kg Kalk/t, 2,1 kg Elektroden/t, 9 kg Stückkohle/t, 12 kg Einblasekohle/t, 55 $Nm^3O_2/t$, 4 $Nm^3CH_4/t$, sowie 290 kWh/t Flüssigstahl. Die dabei eingesetzten Multifunktionslanzen hatten eine Haltbarkeit von 800 Chargen. Lediglich die Düsen zum Kohleeinblasen wurden vorsorglich einmal ausgewechselt.

### Beispiel 2

Bei der Erzeugung einer mit Chrom legierten Verschmelze in einem 60 t Elektroofen konnte der Kohlenstoffgehalt der Schmelze von 0,8 auf 0,3 % mit Hilfe von 3 kleineren Multifunktionslanzen erniedrigt werden. Der $Cr_2O_3$-Gehalt der Schlacke konnte durch das Blasen mit 40 % $O_2$ und 60 % $N_2$ im letzten Drittel der Frischperiode auf unter 12 % gehalten werden. Bei diesen Versuchen waren im Boden des Elektroofens 3 Spüldüsen, die mit $N_2$ + $CH_4$ betrieben wurden, im Einsatz. Durch diese Frischperiode mit den Multifunktionslanzen konnte die anschließende VOD Behandlung um 30 min/Charge verkürzt werden. Durch das Einblasen von Schlackenbildnern wurde die Schlacke geschäumt. Dazu mußte allerdings die eingeblasene Feststoffmenge auf insgesamt 90 kg/min erhöht werden. Der Endkohlenstoffgehalt betrug 0,03 %.

### Beispiel 3

Beim Einschmelzen von 80 % DRI und 20 % Schrott war eine Multifunktionslanze in Abstichbereich des Ofenerkers und 2 Multifunktionslanzen durch den Deckel des Ofens in das Ofeninnere einfahrbar angebracht. Diese beiden Lanzen bliesen in Richtung der Auftreffstelle des kontinuierlich in den Ofen geförderten DRI's. Dieser Badbereich wurde auch noch mit 2 Spüldüsen die in den Boden des Ofens eingebaut waren und mit $N_2$ + $CH_4$ bliesen besser durchgemischt. Der Hauptvorteil war eine Verkürzung der Abstichzeit bei diesen 150 t Elektroofen von 105 auf 83 min. Die Produktivität wurde um 20 % gesteigert.

### Beispiel 4

In einem mit Sauerstoff und Kalkstaub bodenblasenden 65 t Konverter wurde eine Multifunktionslanze stationär außerhalb des Konverterdrehkreises angeordnet. Durch den Boden wurden 200 $Nm^3 O_2/min$ und durch die Multifunktionslanze in der Hauptentkohlungsperiode bis zu 105 $Nm^3 O_2/min$ aufgeblasen. Durch das 3 minütige Schrottvorwärmen, das Aufblasen von 15 kg Kohle/t und durch die teilweise Nachverbrennung der Konverterabgase im Konverter und Wärmeübertragung konnte der Schrottsatz (bezogen auf das Flüssigstahlausbringen) von 22 auf 27 % erhöht werden. Die Bodendüsen konnten in der Anzahl verringert, der Abstand zwischen den Düsen vergrößert und die Haltbarkeit des Bodens von 700 auf 820 Chargen erhöht werden. Besonders wichtig war auch, daß die Metall- und Schlakkenansätze im Inneren des oberen Konverterkonus so weit reduziert wurden, daß diese nicht mehr durch Abbrennen oder zeitraubendes Ausbrechen entfernt werden mußten. Die Konverterverfügbarkeit wurde dadurch erhöht. Durch die Besonderheit der Multifunktionslanze konnte die Sauerstoffzufuhr von der Seitendüse in der Konverterwand auf außerhalb des Drehkreises des Konverters verlegt werden. Die Lauflänge des Freistrahles vergrößerte sich, ohne irgendeinen nachteiligen Effekt, um 2,4 m.

### Beispiel 5

Als besonders vorteilhaft hat sich die Anwendung der Multifunktionslanzen in einem 120 t DC Elektroofen herausgestellt, in welchem der metallische Einsatz aus 52% spurenelementearmen flüssigem Roheisen und 48 % Schrott bestand. Allerdings hatte das Roheisen einen Phosphorgehalt von 0,15 %. In diesem Elektroofen mit 95 MVA Trafoleistung wurden 4 Multifunktionslanzen in die Seitenwand des Ofens eingebaut. Mit 2 der 4 Lanzen wurde kein Kohleeinblasen durchgeführt, da das flüssige Roheisen genügend Kohlenstoff enthält. Allerdings wurden Düsen6 periodisch mit Kalkstaub (insgesamt 100 kg/min) beaufschlagt, um die Phosphorverschlackung zu unterstützen. Dazu gehörte auch die Maßnahme, die Düsen1 der Multifunktionslanzen in einigen Blasperioden mit hohem Sauerstoffdruck (8 bar) zu beaufschlagen, wodurch sich der FeO-Gehalt der Schlacke von 20 auf 35 % erhöhte. Dies hatte zur Folge, daß die Verteilung des Phosphors zwischen Schlacke und Schmelze von 50 auf 90 angehoben werden konnte, d.h. die Entphosphorung wurde wesentlich verbessert, wodurch ein Phosphorgehalt von 0,015 % in der Fertigprobe ohne Zeitverlust eingestellt werden konnte. Die Schlackenmenge betrug 120 kg/t Flüssigstahl.

Die vorhandenen beiden wassergekühlten Sauerstofflanzen, welche in den Ofen zum Frischen und Schlackenschäumen normalerweise durch die Schlackentür eingefahren werden, wurden entfernt. Die Ofentür wurde nur zum Abschlacken geöffnet, wodurch der Eintritt an kalter stickstoffhaltiger Luft wesentlich reduziert wurde. Es wurde folgende Betriebsweise angewandt:

Nach dem Chargieren des ersten und einzigen Schrottkorbes wurde der Schrottbereich unter der Elektrode in 5 min. geschmolzen, der Ofendeckel geöffnet und das flüssige Roheisen mit der Roheisenpfanne in diesen Raum schnell eingeleert. Bis zu dieser Unterbrechung der Stromzufuhr wurden die Multifunktionslanzen im Brennerbetrieb und vor dem Roheiseneinleeren in Nachverbrennungs- und Schrottschneidebetrieb gefahren. Nach dem Roheiseneinleeren wurde an den 4 Stellen, wo die Frischstrahlen der Multifunktionslanzen auf die Schmelze trafen, mit jeweils 1700 Nm$^3$ O$_2$/h gefrischt. Die Düsen5 für die Nachverbrennung der Ofengase bliesen weniger weit von der Längsachse der Multifunktionslanze weg, als beim Ofenbetrieb mit 100 % Schrotteinsatz. Dadurch wurde die bei der Nachverbrennung freiwerdende Wärme mit höherer Effizienz an die Schlacke und Schmelze übertragen.

Das Ergebnis war eine Erniedrigung des Stromverbrauches von 225 auf 190 kWh/t Flüssigstahl, Verkürzung der Abstichfolgezeit um 10 % und Erniedrigung der Stickstoff-Gehalte in fertigen Stahl von 58 auf 49 ppm im Durchschnitt. Die Haltbarkeit der Multifunktionslanzen ist auch bei dieser Anwendung viel höher als jene der wassergekühlten Frischlanzen.

Es liegt im Sinne der Erfindung, die verschiedenen Möglichkeiten, welche die Multifunktionslanzen und deren Betriebsweisen gestatten, in verschiedenen Ausgestaltungen zu kombinieren und auch an die Betriebsbedingungen anderer Reaktoren zur Herstellung verschiedenster Schmelzen, beispielsweise von Ferrolegierungen mit niedrigen Kohlenstoffgehalten, anzupassen.

**Patentansprüche**

1. Verfahren zum Herstellen einer Metallschmelze in einem metallurgischen Gefäß, insbesondere einer Eisen- oder Stahlschmelze, wobei metall- und/oder metalloxidhältige Einsatzstoffe in fester und gegebenenfalls schmelzflüssiger Form in das metallurgische Gefäß chargiert werden, wobei der Hauptteil der zum Schmelzen und gegebenenfalls Fertigreduzieren der Einsatzstoffe erforderlichen Energie auf elektrischem Weg und/oder durch Verbrennen und/oder Vergasen kohlenstoffhältiger Materialien aufgebracht wird,
mit folgenden Merkmalen :

   **A)** in einem Verbrennungsschritt wird den Einsatzstoffen durch - mittels einer oder mehrerer Multifunktionslanze(n) erfolgendes - Einblasen und Verbrennen gasförmiger und/oder flüssiger kohlenstoffhältiger Materialien und sauerstoffhältigem Gas zusätzliche Energie zugeführt,
   **B)** in einem Schneid- und Schmelzschritt werden die festen Einsatzstoffe durch - mittels der Multifunktionslanze(n) erfolgendes - verstärktes Einblasen von sauerstoffhältigem Gas geschnitten und teilweise geschmolzen,
   **C)** in einem Frischschritt werden die geschmolzenen Einsatzstoffe durch - mittels der Multifunktionslanze(n) erfolgendes - verstärktes Einblasen von sauerstoffhältigem Gas gefrischt,
   **D)** in einem Kohlenstoffeinblasschritt wird den Einsatzstoffen durch - mittels der Multifunktionslanze(n) erfolgendes - Einblasen und gegebenenfalls Verbrennen von feinkörnigen und/oder staubförmigen, festen kohlenstoffhältigen Materialien Legierungskohlenstoff und/oder zusätzliche Energie zugeführt,
   **E)** in einem Nachverbrennungsschritt werden die Abgase des metallurgischen Gefäßes durch - mittels der Multifunktionslanze(n) erfolgendes - Einblasen von sauerstoffhältigem Gas in den Abgasraum des metallurgischen Gefäßes nachverbrannt, wobei die von jeweils einer Multifunktionslanze ausgehenden Strahlen des sauerstoffhältigen Gases windschief zur zentralen Längsachse der jeweiligen Multifunktionslanze stehen und von dieser weggerichtet sind,
   **F)** in einem Feststoffeinblasschritt werden den Einsatzstoffen durch - mittels der Multifunktionslanze(n) erfolgendes - Einblasen von feinkörnigen und/oder staubförmigen, festen Zuschlagstoffen und/oder Legierungsmitteln die erforderlichen Substanzen zugeführt, um die gewünschte Zusammensetzung der Metallschmelze zu erreichen, wobei

   die Schritte **A)** bis **F)**, je nach der Zusammensetzung der Einsatzstoffe und der gewünschten Zusammensetzung der Metallschmelze wahlweise in beliebiger Kombination, insbesondere nacheinander und/oder in umgekehrter Reihenfolge und/oder gleichzeitig und/oder unter Auslassung der Schritte **D)** und/oder **F)** durchgeführt werden.

2. Verfahren nach Anspruch 1, **dadurch gekennzeichnet, daß** als metallurgisches Gefäß ein Elektroofen oder ein Stahlkonverter oder ein Einschmelzvergaser oder eine Pfanne oder ein Gefäß zum Umwandeln von Schlacke verwendet wird.

3. Verfahren nach einem der Ansprüche 1 oder 2, **dadurch gekennzeichnet, daß** das metallurgische Gefäß unter Überdruck, atmosphärischem Druck, Unterdruck oder Vakuum steht.

4. Verfahren nach einem der Ansprüche 1 bis 3, **dadurch gekennzeichnet, daß** eine oder mehrere Multifunktionslanze(n) gemeinsam mit an sich jeweils bekannten Brennern und/oder Frischlanzen und/oder Nachverbrennungslanzen und/oder - bei Elektroöfen - Unterbaddüsen und/oder Hohlelektroden und/oder - bei Konvertern - Seitendüsen verwendet werden.

5. Verfahren nach einem der Ansprüche 1 bis 4, **dadurch gekennzeichnet, daß** in einem Feststoffeinblasschritt einer oder mehrere der folgenden Stoffe in bzw. auf die teilweise oder völlig aufgeschmolzenen Einsatzstoffe geblasen wird: Metallerze, wie Chromerz, Nickelerz und Manganerz, Metalloxide, wie Nickeloxid, Vanadinoxid und Chromoxid, Eisenkarbid, Kalziumkarbid, Aluminium, FeSi, FeCr, FeMn, ölhaltiger Zunder, Schlacken, Schlackenbildner, Stäube aus Entstaubungsanlagen, Schleifstäube, Metallspäne, Desoxidationsmittel, Schredder-Leichtfraktion, Kalk, Kohle, Koks und Eisenschwamm in jeweils feinkörniger und/oder staubförmiger Form.

6. Verfahren nach einem der Ansprüche 1 bis 5, **dadurch gekennzeichnet, daß** in einem Nachverbrennungsschritt das Einblasen von sauerstoffhältigem Gas periodisch schwankend und/oder pulsierend erfolgt.

7. Verfahren nach einem der Ansprüche 1 bis 6, **dadurch gekennzeichnet, daß** in einem Kohlenstoffeinblasschritt und/oder einem Feststoffeinblasschritt in einem Elektroofen der Strahl aus einer Multifunktionslanze in die Nähe der Auftreffstelle oder in die Auftreffstelle von festem Material, welches über eine Öffnung im Ofendeckel auf die Schmelze chargiert wird, oder eines Lichtbogens auf der Schmelze gerichtet wird.

8. Verfahren nach einem der Ansprüche 1 bis 6, **dadurch gekennzeichnet, daß** in einem Kohlenstoffeinblasschritt und/oder einem Feststoffeinblasschritt in einem Konverter der Strahl aus einer Multifunktionslanze in die Nähe der Auftreffstelle oder in die Auftreffstelle eines Sauerstoffstrahls einer weiteren Lanze oder einer Seitendüse auf der Schmelze gerichtet wird.

9. Verfahren nach einem der Ansprüche 1 bis 8, **dadurch gekennzeichnet, daß** einer oder mehrere der Verfahrensschritte A, B, D, E und F mittels einer Multifunktionslanze im wesentlichen zeitgleich mit einem Frischschritt durchgeführt wird.

10. Verfahren nach Anspruch 9, **dadurch gekennzeichnet, daß** ein Verbrennungsschritt mittels einer Multifunktionslanze im wesentlichen zeitgleich mit einem Frischschritt durchgeführt wird.

11. Verfahren nach einem der Ansprüche 1 bis 10, **dadurch gekennzeichnet, daß** in einem Frischschritt bei der Herstellung von - bevorzugt legierten - Eisenschmelzen mit niedrigem Kohlenstoffgehalt - zusätzlich zum verstärkten Einblasen von sauerstoffhältigem Gas - Wasserdampf und/oder ein Inertgas, wie Stickstoff und/oder Edelgase, in bzw. auf die teilweise oder vollständig aufgeschmolzenen Einsatzstoffe geblasen werden.

12. Verfahren nach einem der Ansprüche 1 bis 11, **dadurch gekennzeichnet, daß** in einem Kohlenstoffeinblasschritt bei der Herstellung von Eisen- bzw. Stahlschmelzen mit niedrigem Kohlenstoffgehalt die kohlenstoffhältigen Materialien mit niedriger Geschwindigkeit nur auf und in die über der Schmelze befindliche Schlacke geblasen werden.

13. Verfahren nach einem der Ansprüche 1 bis 12, **dadurch gekennzeichnet, daß** während einem oder mehreren der Verfahrensschritte A, B, C und E ein Flüssigkeitseinblasschritt (G) erfolgt, wobei - mittels der Multifunktionslanze(n) - brennbare und/oder unbrennbare, ansonsten schwer zu entsorgende, gegebenenfalls toxische, Flüssigkeiten eingeblasen, thermisch zerlegt und **dadurch** umweltfreundlich entsorgt werden.

14. Verfahren nach Anspruch 13, **dadurch gekennzeichnet, daß** der Flüssigkeitseinblasschritt während einem Frischschritt durchgeführt wird, bzw. daß der Flüssigkeitsstrahl auf die Auftreffstelle eines Lichtbogens auf der Schmelze gerichtet wird.

15. Verfahren nach einem der Ansprüche 1 bis 14, **dadurch gekennzeichnet, daß** während eines Frischschrittes (C) der eingeblasene Strahl des sauerstoffhältigen Gases durch - mittels der Multifunktionslanze erfolgendes - Einblasen eines weiteren Gasstrahles gezielt beeinflusst wird.

**Claims**

1. Method for producing a metal melt in a metallurgical vessel, in particular an iron or steel melt, feed substances which contain metals and/or metal oxides, being charged in solid and, if appropriate, molten form into the metallurgical vessel, the main part of the energy necessary for the melting and, if appropriate, finish-reduction of the feed substances being applied electrically and/or by the combustion and/or gasification of carbon-containing materials, having the following features:
that

A) in a combustion step, additional energy is supplied to the feed substances by the blowing-in, taking place by means of one or more multifunctional lances, and combustion of gaseous and/or liquid carbon-containing materials and oxygen-containing gas,

B) in a cutting and melting step, the solid feed substances are cut and partially melted by the intensified blowing-in, taking place by means of the multi-functional lance or lances, of oxygen-containing gas,

C) in a refining step, the melted feed substances are refined by the intensified blowing-in, taking place by means of the multi-functional lance or lances, of oxygen-containing gas,

D) in a carbon blow-in step, alloying carbon and/or additional energy is supplied to the feed substances by the blowing-in, taking place by means of the multi-functional lance or lances, and, if appropriate, combustion of fine-grained and/or dust-like solid carbon-containing materials,

E) in a post-combustion step, the waste gases from the metallurgical vessel are afterburnt by the blowing-in, taking place by means of the multi-functional lance or lances, of oxygen-containing gas into the waste-gas space of the metallurgical vessel, the jets of the oxygen-containing gas which emanate in each case from a multi-functional lance being skew to the central longitudinal axis of the respective multi-functional lance and being directed away from them,

F) in a solid blow-in step, the necessary substances are supplied to the feed substances by the blowing-in, taking place by means of the multi-functional lance or lances, of fine-grained and/or dust-like solid aggregates and/or alloying agents, in order to achieve the desired composition of the metal melt,

steps A) to F) being carried out, depending on the composition of the feed substances and on the desired composition of the metal melt, selectively in any desired combination, in particular in succession and/or in reverse order and/or simultaneously and/or omitting steps D) and/or F).

2. Method according to Claim 1, **characterized in that** an electric furnace or a steel converter or a melting-down gasifier or a ladle or a vessel for the conversion of slag is used as a metallurgical vessel.

3. Method according to one of Claims 1 or 2, **characterized in that** the metallurgical vessel is under overpressure, atmospheric pressure, underpressure or a vacuum.

4. Method according to one of Claims 1 to 3, **characterized in that** one or more multi-functional lances are used jointly with burners and/or refining lances and/or post-combustion lances and/or, in the case of electric furnaces, under-bath nozzles and/or hollow electrodes and/or, in the case of converters, side nozzles, which in each case are known per se.

5. Method according to one of Claims 1 to 4, **characterized in that**, in a solid blow-in step, one or more of the following substances are blown into or onto the partially or completely melted feed substances: metal ores, such as chrome ore, nickel ore and manganese ore, metal oxides, such as nickel oxide, vanadium oxide and chrome oxide, iron carbide, calcium carbide, aluminium, FeSi, FeCr, FeMn, oil-containing scale, slags, slag formers, dusts from dedusting systems, grinding dusts, metal chips, deoxidants, shredderlight fraction, lime, coal, coke and sponge iron, in each case in fine-grained and/or dust-like form.

6. Method according to one of Claims 1 to 5, **characterized in that**, in a post-combustion step, the blowing-in of oxygen-containing gas takes place in a periodically fluctuating and/or pulsating manner.

7. Method according to one of Claims 1 to 6, **characterized in that**, in a carbon blow-in step and/or a solid blow-in step in an electric furnace, the jet from a multi-functional lance is directed into the vicinity of the point of impingement or into the point of impingement of solid material, which is charged onto the melt via an orifice in the furnace roof, or of an arc on the melt.

8. Method according to one of Claims 1 to 6, **characterized in that**, in a carbon blow-in step and/or a solid blow-in step in a converter, the jet from a multi-functional lance is directed into the vicinity of the point of impingement or into the point of impingement of an oxygen jet from a further lance or a side nozzle on the melt.

9. Method according to one of Claims 1 to 8, **characterized in that** one or more of the method steps A, B, D, E and F are carried out by means of a multi-functional lance essentially simultaneously with a refining step.

10. Method according to Claim 9, **characterized in that** a combustion step is carried out by means of a multi-functional lance essentially simultaneously with a refining step.

11. Method according to one of Claims 1 to 10, **characterized in that**, in a refining step during the production of preferably alloyed iron melts with a low carbon content, steam and/or an inert gas, such as nitrogen, and/or rare gases are blown into or onto the partially or completely melted feed substances, in addition to the intensified blowing-in of oxygen-containing gas.

**12.** Method according to one of Claims 1 to 11, **characterized in that**, in a carbon blow-in step, during the production of iron melts or steel melts with a low carbon content, the carbon-containing materials are blown at low velocity only onto and into the slag located above the melt.

**13.** Method according to one of Claims 1 to 12, **characterized in that**, during one or more of method steps A, B, C and E, a liquid blow-in step (G) is carried out, burnable and/or unburnable, possibly toxic liquids, which are otherwise difficult to dispose of, being blown in by means of the multi-functional lance or lances, thermally decomposed and thereby disposed of in an environmentally friendly way.

**14.** Method according to Claim 13, **characterized in that** the liquid blow-in step is carried out during a refining step, or **in that** the liquid jet is directed onto the point of impingement of an arc on the melt.

**15.** Method according to one of Claims 1 to 14, **characterized in that**, during a refining step (C), the blown-in jet of the oxygen-containing gas is influenced in a controlled manner by the blowing-in, taking place by means of the multi-functional lance, of a further gas jet.

## Revendications

**1.** Procédé de production d'une masse de métal en fusion dans un récipient métallurgique, en particulier d'une masse de fonte en fusion ou d'une masse d'acier en fusion, dans lequel on charge dans le récipient métallurgique des substances de chargement qui contiennent du métal et/ou des oxydes métalliques et qui sont à l'état solide ou éventuellement à l'état fondu, la plus grande part de l'énergie nécessaire pour faire fondre et éventuellement pour compléter la réduction des substances de chargement étant électrique et/ou résultant de la combustion et/ou de la gazéification de matériaux qui contiennent du carbone, lequel procédé présente les caractéristiques suivantes :

A) dans une étape de combustion, on amène de l'énergie supplémentaire aux substances de chargement par injection effectuée au moyen de la ou des lances multifonctionnelles et combustion de matériaux gazeux et/ou liquides qui contiennent du carbone et d'un gaz qui contient de l'oxygène,
B) dans une étape de découpe et de fusion, les substances solides de chargement sont découpées et partiellement fondues par injection renforcée, effectuée au moyen de la ou des lances multifonctionnelles, d'un gaz qui contient de l'oxygène,
C) dans une étape d'affinage, les substances de chargement en fusion sont affinées par injection renforcée, effectuée au moyen de la ou des lances multifonctionnelles, d'un gaz qui contient de l'oxygène,
D) dans une étape d'injection de carbone, on apporte au moyen de la ou des lances multifonctionnelles du carbone d'alliage aux substances de chargement par injection et éventuellement combustion de matériaux à granulométrie fine et/ou pulvérulents et à l'état solide qui contiennent du carbone, et/ou on apporte de l'énergie supplémentaire,
E) dans une étape de chauffage, les gaz de fumée du récipient métallurgique sont brûlés dans l'espace de gaz de fumée du récipient métallurgique par injection au moyen de la ou des lances multifonctionnelles d'un gaz qui contient de l'oxygène, les jets de gaz qui contient de l'oxygène qui sortent de chacune des lances multifonctionnelles étant transversaux par rapport à l'axe longitudinal central de chacune des lances multifonctionnelles et s'éloignant de celui-ci,
F) dans une étape d'injection de substances solides, on apporte aux substances de chargement les substances nécessaires pour obtenir la composition souhaitée du métal en fusion, par injection au moyen de la ou des lances multifonctionnelles de substances concassées à granulométrie fine et/ou pulvérulentes solides et/ou d'agents d'alliage,

les étapes A) à F) étant effectuées selon la composition des substances de chargement et de la composition souhaitée du métal en fusion, en combinaison quelconque et en particulier les unes après les autres, en ordre inversé, simultanément et/ou en omettant les étapes D) et/ou F).

**2.** Procédé selon la revendication 1, **caractérisé en ce que** le récipient métallurgique est un four électrique, un convertisseur d'acier, un convertisseur à soufflage d'oxygène, une poche de coulée ou un récipient de transformation de scories.

**3.** Procédé selon l'une des revendications 1 ou 2, **caractérisé en ce que** le récipient métallurgique est placé à une pression supérieure, égale ou inférieure à la pression atmosphérique ou sous vide.

**4.** Procédé selon l'une des revendications 1 à 3, **caractérisé en ce qu'**une ou plusieurs lances multifonctionnelles sont utilisées avec des brûleurs connus en soi, des lances d'affinage, des lances de réchauffage, des ajutages situés sous le bain et/ou des électrodes creuses dans le cas de fours électriques, et/ou des ajutages latéraux dans le cas de convertisseurs.

5. Procédé selon l'une des revendications 1 à 4, **caractérisé en ce que**, dans une étape d'injection de matières solides, on injecte une ou plusieurs des matières suivantes dans ou sur les matières de chargement partiellement ou totalement fondues : minerais de métaux, par exemple du minerai de chrome, du minerai de nickel et du minerai de manganèse, des oxydes métalliques, par exemple de l'oxyde de nickel, de l'oxyde de vanadium et de l'oxyde de chrome, du carbure de fer, du carbure de calcium, de l'aluminium, du FeSi, du FeCr, du FeMn, du coke de pétrole, des scories, des agents de formation de scories, des poussières provenant d'installations de dépoussiérage, des poussières de meulage, des limailles métalliques, des agents de désoxydation, de la fraction légère de déchiquetage, de la chaux, du charbon, de la coke et de l'éponge de fer, chaque fois sous forme de grains fins et/ou de poussières.

6. Procédé selon l'une des revendications 1 à 5, **caractérisé en ce que**, dans une étape de réchauffage, l'injection de gaz qui contient de l'oxygène est effectuée par oscillations et/ou pulsations périodiques.

7. Procédé selon l'une des revendications 1 à 6, **caractérisé en ce que** dans une étape d'injection de carbone et/ou dans une étape d'injection de matières solides dans un four électrique, le jet qui sort d'une lance multifonctionnelle est dirigé près de ou à l'emplacement où aboutit le matériau solide qui est chargé dans la masse en fusion par l'intermédiaire d'une ouverture ménagée dans le couvercle du four, ou à proximité d'un arc électrique dans la masse en fusion.

8. Procédé selon l'une des revendications 1 à 6, **caractérisé en ce que** dans une étape d'injection de carbone et/ou dans une étape d'injection de matières solides dans un convertisseur, le jet qui sort d'une lance multifonctionnelle est dirigé sur la masse en fusion près de ou à l'emplacement où aboutit un jet d'oxygène d'une autre lance, ou d'un ajutage latéral.

9. Procédé selon l'une des revendications 1 à 8, **caractérisé en ce que** l'une ou plusieurs des étapes A, B, D, E et F du procédé sont effectuées au moyen d'une lance multifonctionnelle essentiellement en même temps qu'une étape d'affinage.

10. Procédé selon la revendication 9, **caractérisé en ce qu'**une étape de combustion finale est effectuée essentiellement en même temps qu'une étape d'affinage au moyen d'une lance multifonctionnelle.

11. Procédé selon l'une des revendications 1 à 10, **caractérisé en ce que**, dans une étape d'affinage effectuée lors de la production de fonte en fusion à basse teneur en carbone et de préférence alliée, en plus de procéder à l'injection renforcée de gaz qui contient de l'oxygène, on injecte de la vapeur d'eau et/ou un gaz inerte, par exemple de l'azote et/ou des gaz rares, dans ou sur les substances de chargement partiellement ou totalement fondues.

12. Procédé selon l'une des revendications 1 à 11, **caractérisé en ce que** dans une étape d'injection de carbone effectuée lors de la production de fonte en fusion ou d'acier en fusion à basse teneur en carbone, on injecte à faible vitesse les matériaux qui contiennent du carbone uniquement sur et dans les scories qui se trouvent au-dessus de la masse en fusion.

13. Procédé selon l'une des revendications 1 à 12, **caractérisé en ce que** lors d'une ou de plusieurs des étapes A, B, C et E du procédé, on effectue une étape (G) d'injection de liquide lors de laquelle on injecte au moyen de la ou des lances multifonctionnelles des liquides combustibles et/ou non combustibles, éventuellement toxiques, qu'il est difficile d'éliminer autrement, on les décompose thermiquement et on les élimine ainsi de manière non polluante.

14. Procédé selon la revendication 13, **caractérisé en ce que** l'on effectue l'étape d'injection de liquide dans une étape d'affinage et **en ce que** le jet de liquide est dirigé sur l'emplacement d'incidence d'un arc électrique sur la masse en fusion.

15. Procédé selon l'une des revendications 1 à 14, **caractérisé en ce que**, dans une étape d'affinage (C), on agit de manière ciblée sur le jet de gaz injecté qui contient de l'oxygène en injectant un autre jet de gaz au moyen de la lance multifonctionnelle.

Fig. 1:

**Fig. 2:**

Fig. 3:

Fig. 4:

Fig. 5:

**Fig. 6:**

Fig. 7:

Fig. 8:

Fig. 8a:

Fig. 9:

Fig. 9a: